# EUROPEAN PATENT SPECIFICATION

(11) **EP 4 083 884 B1**
(45) Date of publication and mention of the grant of the patent: **28.01.2026**
(21) Application number: 22170712.8
(22) Date of filing: 29.04.2022
(51) Int. Cl.: G06Q 10/0875, B28C 7/00, B28C 7/04, B28C 9/02, G06Q 50/08

(54) **IMPROVED SYSTEM FOR PRODUCING BUILDING MATERIALS**
VERBESSERTES SYSTEM ZUR HERSTELLUNG VON BAUSTOFFEN
SYSTÈME AMÉLIORÉ POUR LA PRODUCTION DE MATÉRIAUX DE CONSTRUCTION

(30) Priority: 29.04.2021 IT 202100010937
(43) Date of publication of application: 02.11.2022
(73) Proprietor: Ziche Investimenti S.r.l., 25121 Brescia (IT)
(72) Inventor: ZICHE, Roberto, 25080 Nuvolera (BS) (IT)
(74) Representative: Botti & Ferrari S.p.A.

(56) References cited:
- EP-A2- 0 268 991
- EP-B1- 0 468 827
- CN-A- 110 435 011
- CN-U- 210 589 936
- DE-A1- 4 401 402
- ES-A2- 2 061 364
- US-A1- 2014 030 031
- ANONYMOUS: "Mobilit� et productivit� Centrales � b�ton mobiles", 15 March 2017 (2017-03-15), pages 1 - 12, XP055878295, Retrieved from the Internet <URL:https://www.liebherr.com/external/products/products-assets/276541/liebherr-brochure-mobilmix-fr.pdf> [retrieved on 20220112]
- BENDAOUD HAKIM: "Quand installer une centrale � b�ton mobile ?", 18 September 2015 (2015-09-18), pages 1 - 7, XP055878219, Retrieved from the Internet <URL:https://www.lemoniteur.fr/article/quand-installer-une-centrale-a-beton-mobile.813654> [retrieved on 20220112]
- TITO LUCCHINI SUSANNA: "Industry 4.0 in Italy; example of application: prepackaged concrete production plants", 1 January 2019 (2019-01-01), pages 1,3-6,53-71, XP055877795, Retrieved from the Internet <URL:http://tesi.luiss.it/25006/1/212341_TITO%20LUCCHINI_SUSANNA.pdf> [retrieved on 20220111]
- ANONYMOUS: "New Liebherr mobile tower silo for concrete batching plants - Liebherr", 2 July 2018 (2018-07-02), pages 1 - 2, XP055877973, Retrieved from the Internet <URL:https://www.liebherr.com/en/usa/latest-news/news-press-releases/detail/new-liebherr-mobile-tower-silo-for-concrete-batching-plants.html> [retrieved on 20220112]
- KOENIG PAT: "A case for IIoT's future in supply chain management: White Paper | VEGA", 25 April 2019 (2019-04-25), pages 1 - 5, XP055877823, Retrieved from the Internet <URL:https://www.vega.com/en-de/company/blog/2019/white-paper-iiot-future-in-supply-chain-management> [retrieved on 20220111]
- ROTTENDORF H ET AL: "Computer-aided dispatch automation at Mannersdorf cement works, Austria", ZKG - ZEMENT/KALK/GIPS,, vol. 40, no. 12, 1 December 1987 (1987-12-01), pages 602 - 609, XP001261501
- ANONYMOUS: "INNOVATIV, WIRTSCHAFTLICH, INDIVIDUELL Intelligente Silo-L�sungen", 10 March 2014 (2014-03-10), pages 1 - 15, XP055878650, Retrieved from the Internet <URL:https://www.zeppelin-systems.com/media/zeppelin-systems-silotechnik-bolttec-paneltec-weldtec.pdf> [retrieved on 20220113]

## Description

### Field of application

The present invention refers to a complex technological system for producing building materials comprising a station for the automated loading of the movable silos which, once transported on the construction site, are able to continuously exchange data with said station. This system allows, for example, the production of building materials for screeds, bike lanes, insulations of vertical walls, finished floors, etc. The following description refers to this field of application with the sole purpose to simplify the exposition thereof.

### Prior art

As well known in the construction industry, the aggregates and the binders which are separately brought on the construction site are often approximately dosed without using the instruments which can allow a properly carrying out of the prescribed production recipe; furthermore, by mixing the products on the construction site as described above, there are no ways to precisely dose the quantity of water which is necessary to form the various types of agglomerate as provided by the production recipe.

In the last few years, the carbonate industry allowed to pre-mix in a factory aggregates and binders according to the production recipes provided for each type of building material to be produced, transporting the pre-mixed product on the construction site (inside designated vertical cylindrical one-chamber containers with conical bottom, called "silos"). This solution has, however, many drawbacks since, during the transport, a separation between the fine parts and the bigger ones of the mixture can take place, thus creating an inhomogeneous mixture.

Document "Mobilité et productivité Centrales à béton mobiles", 15 March 2017 (2017-03-15)relates to movable mixing apparatuses and describes movable silos and mixing stations which may be build on site.Document "Quand installer une centrale à béton mobile ?", 18 September 2015 (2015-09-18) relates to the installation of a movable plant and the economical advantages thereof.Document "Industry 4.0 in Italy; example of application: prepackaged concrete production plants", 1 January 2019 (2019-01-01) relates to a concrete plant for the production of pre-mixed materials, which are already mixed with each other when they are transported to the construction site.

Once arrived, the pre-mixed product is taken out of the silo and, by suitable pumping stations, it is mixed with water or other additives, however, without a scientific and mandatory control of the quantity of dosed components and of the temperature present at that moment.

It thus happens too often that one or more process steps are subjected to errors by the operators, with negative consequences on the quality of the end result.

The technical problem underlying the present invention is to devise a system for producing building materials having functional and structural characteristics so as to allow to overcome the limits and drawbacks complained related to the prior art, in particular which is able to manage all the steps of the process in an efficient and completely automatic way, thus optimizing it in all the steps and avoiding errors by the operators, allowing to produce actually certified building materials.

### Summary of the invention

The solution idea underlying the present invention is to provide a system for producing building materials which comprises an automated loading station, construction site movable silos and mixing and pumping stations which are in permanent communication with each other thanks to a management unit placed for example at the loading station, said management unit being able to automatically manage a plurality of orders (consequently changing the recipes for the single silos) to obtain a plurality of products to be produced, and being furthermore able to manage the following loading steps of the movable silos and the transport logistics thereof, as well as to control the mixing/pumping steps on the construction site and order the taking out of the depleted silos providing for the substitution thereof with full silos. In particular, the loading of each silo is automatically carried out based on the production recipe processed by the management unit according to what was determined by the order (for example automatically provided by the corporate management software), as well as the taking out of the raw materials from said silos (which comprise at least two chambers separated from each other) is automatically managed and innovatively controlling in a precise way the quantity and the proportions of the taken-out raw materials to be mixed on the construction site in the mixing and pumping station, such that an operator cannot vary the production parameters set by the production recipe; also the transport and taking out steps of the silos on the construction site are managed in a completely automated way by the management unit, by sending all the suitable instructions to the drivers based on the production recipe and/or the progress of the works/production on the construction site. In this way, an automated system is obtained in which a silo is no more a simple material container, but a smart car which is able to efficiently communicate with the other components of the system thanks to the management unit, by controlling all the process steps up to the laying of the building material to be produced, and wherein it does not further contain pre-mixed material, but raw materials to be mixed on the construction site.

Based on said solution idea, the above-mentioned technical problem is solved by a system for producing building materials, comprising:
- at least one movable silo adapted to contain raw materials to be mixed, said movable silo comprising at least two chambers which are separated from each other and adapted to contain a respective raw material;
- a loading station comprising loading means adapted to load the raw materials in the chambers of the construction site movable silo; and
- a management unit configured to:
- process (receive) a production recipe containing instructions related to the production of the building material;
- optionally, automatically select the raw materials, that is select the type and/or quantity of the raw materials, to be loaded in the chambers of the movable silo based on said received production recipe; and
- automatically control the loading means of the loading station based on the recipe, said loading means being thereby adapted to automatically load the selected raw materials into the chambers of the movable silo based on instructions of the management unit, each chamber of the movable silo being loaded by said loading means with a respective raw material,
said system further comprising at least one mixing and pumping station configured to receive raw materials from the chambers of the movable silo for the mixing and following pumping thereof, wherein the management unit is further configured to automatically control, based on the production recipe, the dosage (and thus the quantity and/or proportion) of the raw materials taken out from the chambers of the movable silo for the mixing thereof in the mixing and pumping station.

More in particular, the invention comprises the following additional and optional characteristics, taken singularly or, if necessary, in combination.

According to an aspect of the present invention, the loading station can comprise a first plurality of storage silos, which are adapted to contain binders, and a second plurality of storage silos, which are adapted to contain aggregates, which are intended to be loaded in the chambers of the movable silo.

According to an aspect of the present invention, the loading station can comprise sensors which are controlled by the management unit to generate, based on signals of said sensors, a signalling (for example activate acoustic signalling elements and/or manage the emission of luminous signalling elements or send a signal to computerized means of transport means) if a raw material contained in one or more of said storage silos is finished or below a predetermined threshold value. These sensors can be for example level sensors, as well as weight and/or position sensors to verify the presence of material in the storage silos (or also when exiting therefrom).

According to an aspect of the present invention, the system can comprise, at the binder loading area of the loading station, a plurality of inlet ports for feeding binders to the storage silos adapted to contain binders, each inlet port being associated to a determined binder to be fed, wherein the management unit is configured to:
- optionally, generate an order of a binder as determined by the production recipe;
- verify if a provided binder corresponds to the one expected based on the production recipe;
- based on said verification, enable the opening of a determined inlet port and control the closing of the remaining inlet ports; and
- activate a luminous signalling element of a plurality of luminous signalling elements of a binder storage area of said loading station, said luminous signalling elements being adapted to signal said enabled inlet port.

According to an aspect of the present invention, the loading station can comprise a plurality of attachment means, such as magnetic holders and compressed air holders, for a corresponding plurality of storage silos adapted to contain aggregates, the management unit being configured to:
- optionally, generate an order of an aggregate as determined by the production recipe;
- optionally activate, based on the expected aggregate, a luminous signalling element of a plurality of luminous signalling elements (different from those present in the binder storage area) adapted to signal to an operator the position of set attachment means to which the storage silo containing the expected aggregate is to be connected (an indication can be generated on computerized means, such as a tablet, which are present in the cabin of the transport means of the storage silo);
- enable the opening of an exhaust valve (for example a knife gate valve) of the storage silo if said storage silo is connected to the set attachment means; and
- generate a warning signal (for example activate acoustic signalling elements and/or manage the emission of the luminous signalling elements) and not enable the opening of the exhaust valve of the storage silo if said storage silo is not connected to the set attachment means and/or if said connection to the attachment means is not occurring within a predetermined amount of time.

According to an aspect of the present invention, the loading station can comprise a weighting station, such as a weighbridge, configured to measure the weight of transport means of raw materials, which enter the loading station, before and after the delivering of said raw materials, said management unit being configured to verify if the difference between the weight measured by said weighting station before the delivering of the raw materials and the weight measured by said weighting station after the delivering of the raw materials substantially corresponds to the weight of said raw materials as provided by the production recipe.

According to an aspect of the present invention, the system can comprise, at the loading station, a loading grid comprising a plurality of loading terminals for a corresponding plurality of movable silos, said management unit being configured to manage the loading of each movable silo at one of said loading terminals independently from the other movable silos based on the instructions of the production recipes.

According to an aspect of the present invention, the management unit can be further configured to select, based on the production recipe, the number of movable silos of the plurality of movable silos to be filled and to be successively taken out.

According to an aspect of the present invention, the loading station can comprise, at the loading grid, attachment means at each loading terminal for the movable silos, the management unit being configured to verify the connection of said movable silos to the attachment means at the respective loading terminal.

According to an aspect of the present invention, the mixing and pumping station can comprise sensors configured to weight the raw materials from the chambers of the movable silo, such as for example a plurality of loading cells arranged on a base platform of said mixing and pumping station, and wherein the dosage of the mixed raw materials is established based on the detection of said sensors. In addition or alternatively, the sensors configured to weight the raw materials can be arranged on the movable silo itself, for example on the support feet thereof. In this case it is evaluated the overall diminishing of the weight of the movable silo. In general, it can be thus said that the system of the present invention can comprise sensors adapted to measure the weight of the raw materials which are taken out and that the dosage of said raw materials is adjusted based on said sensors, still following the instruction of the production recipe.

According to an aspect of the present invention, the system can comprise (for example, but not necessarily, at the mixing and pumping station) sensors (such as for example temperature sensors) adapted to detect environmental parameters in a construction site area, said sensors being operatively coupled with the management unit, wherein said management unit is configured to interrupt the operation of the mixing and pumping station if the environmental parameters detected via said sensors exceed or are equal to a determined threshold value. These sensors can be also arranged on the movable silo.

According to an aspect of the present invention, the movable silo can comprise at least one first chamber and one second chamber which follow each other along a longitudinal axis of said movable silo, wherein the first chamber is adapted to contain aggregates and the second chamber is adapted to contain binders.

According to an aspect of the present invention, the movable silo can further comprise a third chamber arranged for example between the first chamber and the second chamber, said third chamber being adapted to contain liquids.

According to an aspect of the present invention, the movable silo can comprise sensors, such as level sensors, configured to detect the level of the raw materials contained in the chambers thereof, the management unit being further configured to monitor the quantity of the raw materials in said chambers of said movable silo based on signals from said sensors.

According to another aspect of the present invention, the system can comprise computerized means adapted to be installed on transport means of the movable silo, said computerized means being in operative communication with the management unit, which is configured to generate transport instructions communicated to said computerized means, for example based on the production recipe and/or work parameters on the construction site or in the loading station.

According to an aspect of the present invention, the transport instructions can be generated based on the quantity of raw materials in the chambers of the movable silos detected via the signals from the level sensors when said movable silos are on the construction site, wherein the management unit is configured to estimate the number of remaining mixing and pumping cycles based on said detected quantity.

According to an aspect of the present invention, the movable silo can comprise a display controlled by the management unit and adapted to show visual information.

According to an aspect of the present invention, the management unit can be at the loading station, the mixing and pumping station can comprise data reception/transmission means from/to the management unit for an operative communication therewith, and the movable silo can be adapted to communicate with the loading station via said mixing and pumping station. In addition or alternatively, the movable silo can comprise data reception/transmission means from/to the management unit for an operative connection therewith, without necessarily having to pass through the mixing and pumping station.

The present invention also refers to a production process of a building material, comprising the steps of:
- processing (receiving) a production recipe containing instructions related to the production of the building material;
- selecting, optionally, raw materials to be loaded inside at least two chambers of a movable silo based on said received production recipe;
- based on said production recipe, automatically controlling loading means of a loading station for loading raw materials in chambers of a movable silo;
- controlling the taking out of the raw materials from the chambers of the movable silo based on the production recipe, wherein the dosage of the raw materials taken out from said chambers of said movable silo is automatically defined based on the instructions of the production recipe;
- mixing the raw materials from the chambers of the movable silo by means of a mixing and pumping station; and
- laying the building material obtained by the mixing.

Finally, the present invention also refers to a computer product for managing a system for the production of a building material, said computer product comprising code portions which, when they are executed in a management unit as described above, are adapted to control the system according to the above-mentioned method.

The characteristics and advantages of the system of the present invention will result from the description, made hereinafter, of an actuation example thereof given by way of an indicative and non-limiting example with reference to the attached drawings.

### Brief description of the drawings

- figure 1 is a schematic representation of a movable silo of the system according to the present invention;
- figure 2 is a general scheme of the system of the present invention; and
- figure 3 shows a detail of the system of figure 2, in particular of a loading station.

### Detailed description

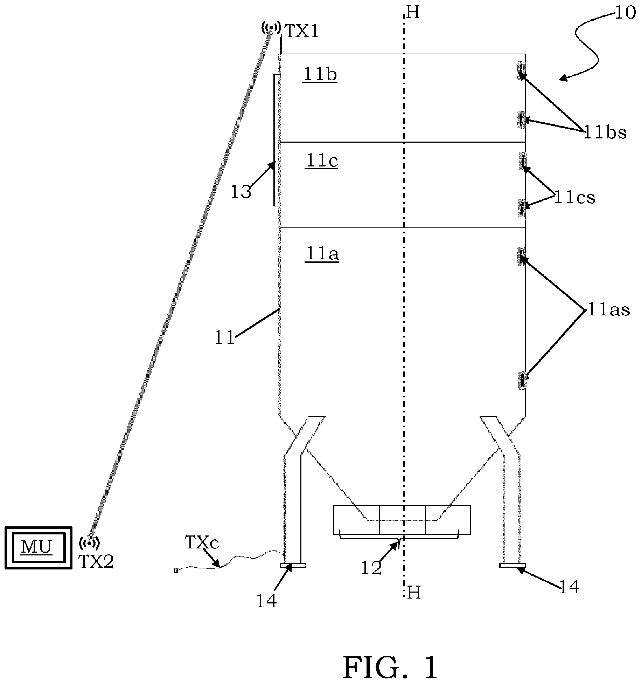

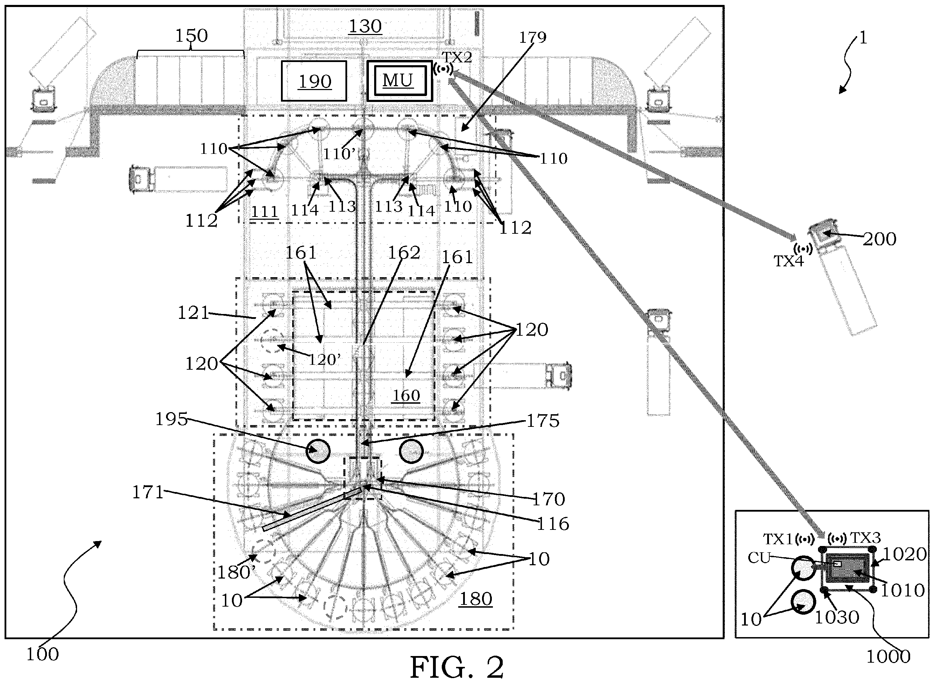

Referring to said figures, and in particular to the example of figure 2, 1 globally and schematically indicates a system for producing building materials according to the present invention.

It should be noted that the figures represent schematic views and are not drawn to scale, but they are instead drawn so as to emphasise the important characteristics of the invention. Furthermore, in the figures, the different pieces are represented in a schematic way, the shape thereof can vary according to the desired application. It should be furthermore noted that, in the figures, identical reference numbers refer to identical elements regarding the form or function. Finally, particular expedients described regarding to an embodiment illustrated in a figure can be also used for the other embodiments illustrated in the other figures.

It can be observed that, when sequences of process steps are illustrated, they do not necessarily follow the indicated sequence, said steps can be inverted unless it is not expressly indicated otherwise.

As will be described in detail below, the system 1 of the present invention is able to carry out a continuous and automatic operative communication between movable silos intended for the building construction sites for producing various types of product, a technological plant for loading aggregates, binders, water, fibres (for example automatically mixed with the aggregates) and/or additives (such as for example dyes) and similar in said movable silos (said plant being called "loading station" in the following) and one or more mixing and pumping stations on the construction sites. The communication between these components is automatically managed via a management unit, which is suitably programmed to carry out steps of an innovative management algorithm.

By way of example only, in an embodiment of the present invention, the system 1 comprises fifteen movable silos, indicated with the reference 10, a loading station, indicated with the reference 100, and four mixing and pumping stations installable on the construction site, indicated with the reference 1000. Obviously, the present invention does not exclude a different number of said components, as well as the presence of other components, said aspects can vary according to the needs and/or necessities.

The system 1 of the present invention is managed in an innovative way in each detail thereof. All the components of the system 1 are interconnected with each other to determine the maximum automation and efficiency level according to the management principles of the Industry 4.0. Suitably, in an embodiment, the movable silos 10, the loading stations 100 and the mixing and pumping stations 1000 on the construction site are all connected via remote access and satisfy all the requirements established by the regulations related to the Industry 4.0.

The main elements of the system 1 and the developed management method are described in the following.

Referring to figure 1, concerning the movable silos 10 adapted to contain raw materials to be transported and mixed on the construction site, they comprise a main body 11 with substantially cylindrical shape with flared or conical bottom and which extends along a longitudinal axis, indicated with the reference H-H, between two opposite ends.

Advantageously according to the present invention, each movable silo 10 comprises at least two chambers, indicated with the references 11a and 11b, which are separated from each other and adapted to contain a respective raw material. Based on the reference to figure 1, the subdivision of the chambers of the movable silo 10 is horizontal, that is said chambers follow each other one after another along the longitudinal axis H-H of said movable silo 10. In an embodiment, a first chamber, for example the chamber 11a (which is a lower chamber according to the reference of figure 1) is adapted to contain aggregates, while a second chamber, for example the chamber 11b (which is an upper chamber according to the reference of figure 1) is adapted to contain binders. The above-mentioned subdivision of the chambers of the movable silo 10 is advantageous since it allows an optimal transport of the raw materials to be mixed directly on the construction site and a better management thereof. Suitably, the transport of the separated raw materials on the construction site allows proceeding with the mixing thereof directly close to the laying point, with great advantages which will be illustrated in the following.

Suitably, the horizontal subdivision of the chambers of the movable silo 10 avoids the arising of detrimental condensate phenomena which would instead take place if the separation of said chambers is a vertical separation.

Even more advantageously, in an embodiment, the movable silo 10 further comprises a third chamber 11c, preferably arranged between the first chamber 11a and the second chamber 11b and fluid-tightly separated therefrom. Suitably, the chamber 11c is adapted to contain liquids, for example water, such that it is in this way possible to transport the water on the construction site directly through the movable site 10, already in the desired quantity, without the need to use external sources, which, in some construction sites, are not always available. The containment and management of the liquid in the third chamber 11c are managed by a suitable vent valve of the movable silo 10.

The present invention provides, in an aspect thereof, that the movable silo 10 is not only a simple transport system of the raw materials on the construction site, but a real intelligent machine which is able to communicate with a management unit, as will be detailed in the following.

More in particular, advantageously, the management unit of the system 1, indicated in the following with the reference "MU", is able to monitor, manage and control the components and the process steps in an innovative way. It can be observed from the very beginning that the management unit MU it not limited by a particular architecture and/or installation and can comprise any hardware adapted to provide the present invention. In general, the management unit MU can comprise any computerized system which is able to carry out the instructions of a software dedicated and specifically developed for managing the system 1. The present invention is thus not limited by a particular installation or hardware/software means adopted for the management unit, and also the representations in the drawings are given only by way of example, what matters is that said management unit and the components managed therewith are such as to work as described.

In an embodiment, each movable silo 10 comprises data reception/transmission means TX1 in communication with the management unit MU, which is in turn provided with own data reception/transmission means TX2 to allow the above-mentioned communication. It can be observed that the present invention is not limited by the type of used data reception/transmission means. By way of example only, the data reception/transmission means TX1 of the movable silo 10 comprise an antenna connected to a GSM card for receiving/transmitting data. As will be also detailed in the following, the communication of the movable silo 10 with the management unit MU can be also indirect, for example it can take place via the mixing and pumping station 1000 which communicates with said management unit MU, said movable silo 10 being thus connected to said mixing and pumping station 1000 for example by data transfer cables (indicated in figure 1 with reference TXc), said station thus providing for a communication with the management unit MU.

Furthermore, in an embodiment, the movable silo 10 can comprise one or more additional reservoirs (globally indicated with the reference 12 in figure 1), for example arranged at a lower end of said movable silo 10 (that is the end along the longitudinal axis H-H which is closer to the ground when the movable silo 10 is installed on the construction site). For example, the additional reservoirs 12 can be adapted to contain additives, dyes, further liquids (such as for example water), etc., so as to be able to directly provide, on the construction site, in addition to the main raw materials, further components, which are separated from each other, via the movable silo 10; these further components can be thus optionally added to the mixture of the raw materials according to the specific needs.

In a base version thereof, as clear from the description, the present invention is thus related to a movable silo 10 as described above, comprising two or more separated chambers and possibly additional reservoirs 12, said movable silo 10 being possibly configured as intelligent machine which is able to exchange data, for example with the loading station 100 and with the mixing and pumping stations 1000, said communication being managed by the management unit MU.

In an embodiment of the present invention, the construction site movable silo 10 comprises sensors, such as for example level sensor (probes), configured to detect the level of the raw materials contained in the chambers thereof. In an exemplary embodiment, the movable silo 10 can comprise at least one level sensor 11as of the aggregate in the first chamber 11a (for example arranged in said chamber 11a at around 30% of the depletion), as well as a pair of level sensors 11bs to measure the level of the binder in the chamber 11b (for example a sensor at 200 kg and one at the maximum load level, for example 6500 Kg). In the embodiment in which also the third chamber 11c is present, there can be also two level sensors 11cs for measuring the level of the liquid contained in said chamber 11c.

Suitably, the management unit MU is configured to receive signals from the above-mentioned level sensors and constantly monitor the quantity of the raw materials contained in the chambers of the movable silo 10, for example during the loading in the loading station 100 and/or during the carrying out of the mixing and pumping cycles on the construction site, so as to be able to optimize the loading process, the production process on the construction site and the logistics associated thereto, as will be described in the following more in detail.

In an embodiment of the present invention, the movable silo 10 comprises a display 13 controlled by the management unit MU and adapted to show visual information, such as for example information on the raw materials contained in the movable silo 10, information on the production process, information on the construction site, on the client, on the manufacturing company, as well as many other usual information. The display 13 can be arranged on the external surface of the body 11 of the movable silo 10.

Furthermore, the movable silo 10 comprises a programmable logic controller (indicated in the sector as PLC and not illustrated in the figures) which is specifically programmed to manage the supply components of said movable silo 10 and the communication thereof with the remaining components of the system. The PLC can be for example programmable for recording the type of the loaded raw materials and for managing data, as well as many other useful functions.

In the following, some further exemplary and non-limiting details related to the movable silo 10 will be provided; these details are to be understood only as example among the many possible embodiment examples of the present invention and can be implemented alone or, if necessary, in combination with each other.

For example, in an embodiment of the present invention, the movable silo 10 can comprise one or more of the following components: a transformer, a network inlet with three-poles plug, a knife gate valve, two status sensors for the pneumatic activation of the knife gate valve, a communication module PLC for managing the data, two electrovalves for fluidifying the binder (for example cement) with compressed air, a metering screw for extracting binders, a conveyor belt for extracting aggregates, a motorized winch for moving the conveyor belt for extracting aggregates, one or more (for example three) vibrators for the cone at which the aggregate is stored, a vibrator for the binder chamber, various power supplies, electrical contacts for binder loading/vent sleeves and a water feeding tube.

As above mentioned, the loading of the movable silo 10 is carried out in a loading station 100 which comprises suitable loading means (which will be detailed in the following) adapted to load the raw materials in the chambers of said movable silo 10. In an embodiment, as illustrated in the example of figure 2, the management unit MU is arranged at the loading station 100 (that is an integral component of the loading station 100) and it is in operative communication with the remaining main components; in this case, the loading station 100, thanks to the management unit MU installed therein, represents the central brain of the whole system 1. In other embodiments, the management unit MU can be a remote system (and thus not necessarily installed physically in the loading station 100), which communicates (for example by a network system) with various components of the system 1.

Firstly, the management unit MU, following an input by the user, is able to manage a production order, which includes for example the client's name, the seller's name (agent or corporate seller), the name of the construction site and the location thereof, the name of the project manager on the construction site and obviously the type of the desired product and the estimated total quantity to be provided.

More in particular, in an embodiment, the management unit MU carries out steps of a management algorithm which can integrate with management programs which are already present, and thus for example it can receive the order made before and process it. It can be then provided that a first management program (which is for example already present) provides the order and that the management unit MU, which carries out the steps of an own algorithm which is able to easily integrate with management programs which are already present, processes the corresponding recipe; obviously, these are applicative details which are not to be understood as limiting the present invention. Also a point of view can be adopted in which there is only one management software which carries out all the steps, obviously without limiting the scope of the present invention. What matters is that the management unit MU is able to manage the various components of the system 1 based on the processed recipe, which can be for example previously stored therein together with other recipes for other corresponding building materials to be produced. In an embodiment, once the order as described above is received (in particular the type and the quantity of building material to be produced), the management unit MU is able to manage all the rest, starting from the orders to the suppliers of the raw materials, for example in the desired quantities as established by the production recipe.

A specific production recipe, for example previously stored in the management unit MU, is associated with each product. The production recipe includes all the instructions useful to produce the product (that is the desired building material), starting from the type of raw materials (including the water to be added), the quantity and proportion thereof, process methodology, etc.

According to an exemplary embodiment of the present invention, once generated and/or received the above-mentioned production order, the loading station 100, via the management unit MU, automatically manages, based on the production recipe associated to the order and provided for each single type of product, the type and the quantities of aggregates and binders to be loaded in each single construction site movable silo 10, remotely controls the mixing and pumping station 1000 present at the laying point, autonomously calculate in real time the quantity of raw materials which is still necessary to complete the order, autonomously manages the need for raw materials (including the required water) by early sending the orders to the suppliers (for example when said raw materials are finished and/or the level thereof is under a limit level), manages the access ways to the plant for the transport means for the input and/or output of the raw materials and other products, as well as it is able to manage the delivering and/or the withdrawal of the movable silos 10 of the construction site. All these aspects, which can be implemented individually or in combination with each other, will be detailed in the following of the present disclosure.

Advantageously according to the present invention, the management unit MU, once generated/received the order of a building material to be produced, is thus configured to process the production recipe containing the instructions related to the production of said building material, for example (preferably) recalling said production recipe from the own memory or receiving it from an external source. The management unit MU is able to manage a plurality of production recipes (whose instructions can be for example stored therein or provided in any suitable way, as mentioned above), each production recipe being associated to a particular building material which the system 1 of the present invention is able to provide. In this way, once the order has been made, the recipe related to the product (building material) required in said order is processed and the production process managed based on said specific recipe is started, said process being managed in an automatic and efficient way in each step thereof, starting from the supply of the raw materials up to the laying on the construction site, thanks to the particular functionality provided by the management unit MU. In other words, according to the product requested in the order, the production recipe associated thereto is processed via the management unit MU, among the various recipes which said management unit MU is able to process, and the process begins in which the various components begin to perform their own function.

In an embodiment, the management unit MU is able to automatically select the raw materials to be loaded in the chambers of the movable silo 10 based on the production recipe, and, advantageously according to the present invention, still based on the production recipe, it is able to automatically control the loading means of the loading station 100 to load the raw materials selected in the movable silo 10, as will be detailed in the following.

Each chamber of the movable silo 10 is loaded by the loading means of the loading station 100 with a respective raw material, said raw materials being then directly mixed on the construction site via the mixing and pumping station 1000. Obviously, for each particular product, specific raw materials with specific dosages and granularities are selected, as well as the number of movable silos 10 to be filled and to be successively taken out is selected.

More in particular, the loading station 100 is adapted to provide the loading of a raw material in a determined chamber of the movable silo 10 independently from the loading of the other chambers, said process taking place in a completely automated way via the designated loading means of the loading station 100, which comprises multiple components designated for this purpose and controlled and coordinated by the management unit MU. In other words, the loading station 100 is able to load in an automatic way the first chamber 11a of the movable silo 10 with the raw material (for example the aggregate) required by the production recipe, and the second chamber 11b with a different raw material (for example binder); possibly, it is also able to control the pumping of water in the third chamber 11c, which therefore acts as liquid reservoir; in this way, advantageously, after the automatic loading at the loading station 100, the mixing of said loaded and separated raw materials can directly take place on the construction site.

In general, once the building material to be produced has been defined, one or more movable silos 10 of the plurality of movable silos 10 to be loaded with the selected raw materials are chosen, wherein each chamber is adapted to receive a specific raw material. As the recipe varies, the loaded raw materials and also the number of movable silos to be loaded can vary, each silo being preferably managed independently from the others.

The loading station 100 is thus able to manage, via the loading means, a variety of different raw materials to produce various building materials, starting from the management of the aggregates, up to the management of the binders, fluidifying substances, fuels, various liquids, and also the fibre management, as will be described more in detail hereinafter.

Referring to figure 2, the modes (and the main involved components, comprising the above-mentioned loading means), with which the loading station 100 manages the raw materials and the loading thereof in the chambers of the movable silo 10, is described in the following.

Firstly, the loading station 100 comprises a first plurality of storage silos 110, which are adapted to contain binders, and a second plurality of storage silos 120, which are adapted to contain aggregates. In a preferred embodiment of the present invention, the storage silos 110 for the binders are located in a determined binder storage area (identified with the reference 111 inside a dashed rectangle in figure 2 only by way of example), while the storage silos 120 for the aggregates are located in a determined aggregate storage area, identified with the reference 121 in figure 2.

In an exemplary embodiment, as represented in figure 2, the aggregate storage area 121 can comprise eight terminals 120' for eight corresponding storage silos 120; for example, the loading station 100 can be configured to manage four types of aggregates different from each other, wherein each aggregate type has two storage silos 120 placed facing each other on opposite sides of a four-tank hopper, as will be also described in the following.

Still by way of example, the binder storage area 111 can comprise seven storage silos.

It can be however observed that the above-mentioned numbers can obviously vary according to the needs and/or circumstances and are not in any way limiting the scope of the present invention.

In an embodiment, each of the storage silos 120 for the aggregates is with one chamber and can comprise two electrovalves (for example of 24 V DC) and two status sensors for opening/closing a knife gate valve associated thereto, as well as it can comprise three vibrators mounted on the lower cone thereof and a luminous signalling element.

Suitably, in an embodiment, the management unit MU (preferably automatically) sends an order to a supplier when it detects (for example via sensors which will be described in the following) that a raw material stored in the loading station 100 is going to finish, both for the aggregates and for the binders.

As regards the management of the aggregates and the related management of the need and loading of the construction site movable silos 10 by the loading station 100, the system 1 of the present invention is able to control each designated step, component and loading means, as detailed below.

In particular, once the order of the desired aggregate has been sent to the supplier (for example via the management unit MU), for example an aggregate which is going to be finished, said aggregate is delivered at the loading station 100 by a suitable transport means. When said required aggregate (which is contained in a storage silo 120 transported on a designated transport means, for example a truck) enters the loading station 100, the person designated for the transport firstly positions the transport means of the storage silo 120 of the aggregate on a weighbridge 130, for example after opening a first inlet bar by a pressure sensor. At this moment, the designated person is required, for example via a panel of the touch-screen type present at the weighbridge 130, to insert the following data: supplier choice, number of the transport document (DDT), diameter of the granulometry of the aggregate as signalled in the DDT, with confirmation request, and the weight signalled by the supplier. Obviously, other or different data can be required.

In an embodiment, the management unit MU is adapted to verify if the data which were manually inserted by the operator are correct for the storage silo 120 which is being weighted (that is if it corresponds to the one expected based on the production recipe).

If the data inserted by the operator do not correspond to the one expected by the management unit MU, the outlet bar from the weighbridge 130 opens, but not the inlet one to the plant, forcing the driver to temporarily park the wrong aggregate storage silo 120 (for example, but not only, with a wrong granulometry) in a specifically provided parking area, indicated for example with the reference 150 in figure 2. An error message can also appear on the touch-screen panel.

If the management unit MU instead verifies that the inserted data are correct, it commands the opening of the access bars to the loading station 100 and the transport means can head towards the aggregate storage area 121.

In an embodiment, while entering the loading station 100, the storage silo 120 con be detected for example by a RF-ID system (for example at ultrahigh frequency UHF) present at the inlet of the loading station 100 at the weighbridge 130, as further preliminary check of the type of storage silo 120 which is entering.

Once it is entered in the loading station 100, the truck transporting the storage silos 120 is parked in a parking terminal 120' set among a plurality of parking terminals 120' of the aggregate storage area 120.

In an embodiment, each terminal 120' comprises an own detection system (for example RF-ID UHF), adapted to read information of the silo on the truck to verify if the storage silo 120 is parked in the parking terminal 120' assigned thereto as determined by the management unit MU. In other words, the management unit MU is able to locate the correct parking position of the storage silo 120 for example through the system RF-ID UHF, present on each parking terminal 120', such that it is verified that the silo identified as entering is correctly arranged in the determined terminal 120'. In case of error, an alarm is generated, for example on computerized means in the transport means, as well as a sound alarm in the loading station 100, these operations being automatically managed by the management unit MU.

When the access bars to the loading station 100 are opened, the management unit MU simultaneously further controls the switching on of a determined luminous signalling element of a plurality of luminous signalling elements (which are not limited by a particular type) of the aggregate storage area 121, in particular at the determined parking terminal 120' in which the storage silo 120, which was just weighted and verified, must be positioned; in general, a luminous signalling element is provided for each terminal 120'. In an embodiment, if, as indicated above, the silo is parked in a wrong terminal, the emission of the luminous signalling element can be varied in addition to the above-mentioned alarms.

If two vehicles each having an own aggregate storage silo 120 would simultaneously arrive at the loading station 100, the management unit MU would control the switching on only of the luminous signalling element in the terminal 120' to which the arrived first storage silo 120 is destined.

At this moment, once arrived at the aggregate storage area 121, the operator is requested to unload, within a predetermined amount of time, the storage silo 120 of the semitrailer by parking it in the terminal 120' destined thereto and signalled by the luminous signalling element activated at said terminal 120'. The signalling of the current terminal 120' can also occur via computerized means (such as, for example, a tablet) present in the cabin of the transport means of the storage silo 120. The errors in the parking step are avoided thanks to the above-described expedients.

Once parked, it is then requested that the person responsible for the transports actually connects the aggregate storage silo 120 to the loading station 100 by suitable attachment means present in the station, such as for example a magnetic coupling holders and a compressed air line which is preferably provided with fast attachment, both present in each parking terminal 120' of the aggregate storage area 121; obviously, also the storage silos 120 are provided with complementary attachment means.

Once these steps are performed correctly, the management unit MU can successively, if necessary, take out the aggregate from the parked storage silo 120, controlling the opening of the exhaust valve of the silo (that is, for example, of the knife gate valve of the silo) for the successive feeding of the aggregates to a hopper and thus to the movable silos 10, as will be described in the following. Once all is connected, the parking light signals turn off.

If the above-mentioned connections are not taking place within a predetermined amount of time, the management unit MU is configured to generate an alarm (for example to activate an acoustic signalling element or manage the emission of the luminous signalling means), to signal that the storage silo 120 is disconnected or still not parked. If instead, despite the expedients described in the previous paragraphs, the aggregate storage silo 120 is connected in the wrong parking terminal 120', the same alarms, which were just described, activate.

To sum up in other words, according to an advantageous embodiment of the present invention, the loading station 100 comprises, at the aggregate storage area 121, a plurality of attachment means including for example a plurality of magnetic holders and compressed air holders (not illustrated in the figures) in a corresponding plurality of terminals 120' for a corresponding plurality of aggregate storage silos 120. In this case, once the order has been made (for example by the management unit MU) and the desired raw material is arrived at the loading station 100, the management unit MU is configured to generate, based on the type of delivered aggregate, a signal indicating the magnetic holder and the compressed air holder to which the storage silo 120 is to be connected, for example by activating a corresponding luminous signalling element. The management unit MU is thus programmed to enable the opening of an exhaust valve of the silo (such as the above-mentioned knife gate valve) if the storage silo 120 is connected in the expected and determined point and/or in a predetermined amount of time, while it is programmed to generate a warning signal if the storage silo 120 is not connected in the determined and expected point, and/or when these steps take place in a higher amount of time than a predetermined amount of time.

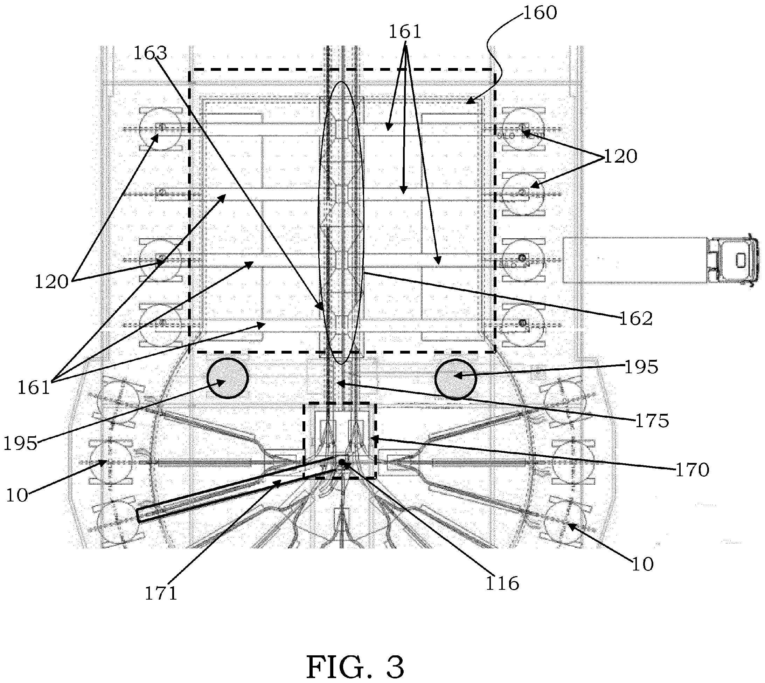

Once the supply of the aggregates is completed (that is the correct positioning and connection of the storage silos 120), it is possible to proceed to the description of the loading of the chamber of the movable silo 10 designated for the aggregates, that is the chamber 11a. To this end, aggregate loading means, which are schematically and globally indicated with the reference 160 inside a square dashed in figure 2 and shown more in detail in figure 3, are present in the loading station 100.

In particular, the loading station 100, via the management unit MU, is configured to control the starting of a hopper, indicated with the reference 162, for filling one or more construction site movable silos 10 destined to a determined order, and more in particular for filling the chamber 11a of said movable silos 10. In order to fill the hopper 162, there is a plurality of connection conveyor belts 161 between each aggregate storage silo 120 and said hopper 162, said conveyor belts 161 being suitably activated based on the production recipe; in an embodiment, it is thus present a conveyor belt 161 for each storage silo 120.

In particular, as illustrated more in detail in figure 3, the aggregate contained in a storage silo 120 is conveyed by means of the conveyor belt 161 towards a respective tank of the hopper 162 to be loaded. In the non-limiting example of figures 2 and 3, eight conveyor belts 161 for loading four tanks of the hopper 162 are present (which is thus, in this example, a four-tank hopper, in which each tank is designated for a particular type of aggregate from one of the eight storage silos), wherein a single tank is filled with the aggregate from the two storage silos 120 which are arranged on opposite sides with respect to said tank. Obviously, a different number of tanks and/or storage silos can be used according to the needs and/or necessities, the present invention being not limited to the above-described configuration.

The hopper 162 is adapted to prepare the granulometric curve determined by the production recipe; to this end, at each tank, the hopper 162 comprises a respective dispenser (not illustrated in the figures) and, suitably, there is the chance that the speed of said dispenser under each tank is automatically varied based on the production recipe (for example following a command by the management unit MU). A belt 163 for conveying the aggregates extracted towards the movable silos 10 to be filled is furthermore arranged under the hopper 162.

As mentioned, in an embodiment, the hopper 162 is configured to work based on the instructions of the production recipe, under control of the management unit MU. For example, the granulometry, as well as possible mixes of aggregates from different storage silos 120, are automatically selected and managed based on the production recipe.

The conveyor belt 161, the hopper 162 with the respective tanks and dispensers at each tank, and the belt 163 are part of the above-mentioned aggregate loading means 160, which are generally part of the loading means of the loading station 100.

Furthermore, it can be observed that the loading of the aggregates can also occur in other suitable modes, without necessarily providing the components described above.

It can be furthermore observed that the management itself of the loading means of the loading station itself has many innovative aspects as seen above (starting from the management of the supply of the aggregates and the conveying thereof towards the movable silo) and is not necessarily connected to the structure of the movable silos 10 and/or to the structure and operation of the mixing and pumping station 1000. In other words, the invention can also refer to the automatic management of the loading station 100, including the safety systems for the correct supply of all the raw materials up to the loading thereof.

The belt 163 arranged below the hopper 162 is configured to convey the prepared raw material towards a conveyor 170, at which a swinging belt 171 is arranged which provides for the loading of the movable silos 10 with the above-mentioned raw material prepared and conveyed thereto.

In an embodiment, the swinging belt 171 is provided with a level sensor configured to stop, together with the management unit MU, the input of material if there are obstructions on the swinging belt 171. Furthermore, the swinging belt 171 comprises a rotating fifth wheel and an encoder arranged thereon for the correct orientation thereof at terminals 180' defined in a loading grid 180 of the movable silos 10 (for example at the centre of said terminals 180'), so as to be able to precisely fill said movable silos 10.

More in particular, the loading grid 180 comprises a plurality of terminals 180' for filling respective movable silos 10 with the raw materials, and is illustrated in figure 2, only by way of example, with fifteen circles inside the dashed rectangle.

Each terminal 180' of the loading grid 180 comprises attachment means of the movable silo 10, such as for example a magnetic holder (for example of 24 V), said movable silo 10 in turn comprising complementary attachment means.

The movable silo 10 to be loaded is automatically selected by the loading station 100 thanks to the management unit MU, said selection (including the number of movable silos to be loaded) being determined based on the production recipe. In an embodiment, each production recipe provides, for each product, the loading and successive taking out of at least two movable silos 10, while for very large construction sites the number of movable silos is higher than two.

The movable silo 10 to be loaded is identified between those present in the loading grid 180 thanks to the connection to the central station via the above-mentioned magnetic holder line present for each movable silo 10 in the loading grid 180.

Each movable silo 10 comprises an aggregate loading port (not illustrated in the figures) and, in order to reach the correct position at said aggregate loading port, the swinging belt 171 comprises an optical reader (also not illustrated) configured to intercept a refractive mirror positioned for this purpose near the aggregate loading port of each movable silo 10; there is then possibly a level sensor at the inlet port of the movable silo 10.

At the end of each filling cycle of a construction site movable silo 10, it is important that the extractor belt 163 of the hopper 162 and the one of the swinging belt 171 are completely unloaded in order to be able to process the successive recipe without contaminants by materials inserted during the loading of the previous silo.

Once the loading of the chamber of the silo containing the aggregates is completed, if also all the other raw materials have been loaded (as will be described in the following), the management unit MU is configured to send, to computerized means associated to the transport means of the movable silo 10 (such as for example a corporate mobile phone or a tablet present in the cabin and globally indicated with the reference 200), the terminal 180' of the movable silo 10 to be taken out from the loading grid 180 and to be taken on the construction site.

The management unit MU is further configured to activate the display 13 mounted on the movable silo 10, as well as to activate a luminous signalling element prearranged at the respective terminal 180' of the loading grid 180.

Before proceeding to the loading on the semitrailer of the transport means, the personnel responsible for the transports is requested to disconnect the utilities connected to the loaded movable silo 10 to be taken out (such as for example the above-mentioned magnetic holder, the compressed air holder, the binder feeding pipe, and similar), thereafter the above-mentioned light signal present in the respective terminal 180' of the loading grid 180 turns off.

If the operator has taken out and loaded a wrong movable silo 10, the management unit MU is able to recognize the error and the loading station 100, under control of said management unit MU, does not allow the vehicle to open the outlet bar. In order to avoid this, the computerized means 200 associated to the transport vehicles are configured to ask, under control of the management unit MU, for confirmation to the driver about the disconnection of the utilities of the movable silo. The transport means can be further provided with a transponder connected with the management unit MU for recognizing the loaded movable silo 10.

In any case, if an error occurs, the computerized means 200 on the transport means continue to signal the number and the position of the correct movable silo 10 which had to be loaded and also the terminal 180' thereof in the loading grid 180, such that the operator can correct the error.

Taking now again into account the aggregate loading area 121, when an aggregate loading silo 120 is depleted, said depletion is detected thanks to a material presence sensor (for example mounted on a conveyor between the storage silo 120 and the conveyor belt 161), and/or thanks to the presence of weight sensors (such as for example loading cells) configured to detect the weight of the related tank of the hopper 162 fed from the storage silo 120. In particular, the depletion of the storage silo 120 is detected when the presence sensor does not detect material and/or when the weight measured by the loading cells does not change with the conveyor belt 161 in motion. When it is detected that the storage silo 120 is depleted, the management unit MU is configured to generate a warning message, which can be sent to the personnel responsible for the transports (for example on the above-mentioned computerized means 200, for example on the corporate mobile phone and/or on the tablet present in the cabin), and the loading station 100 is adapted to activate the luminous signalling element positioned at (for example facing) the aggregate storage silo 120 to be loaded, and to automatically close the exhaust of the silo (for example the knife gate valve).

In other words, the loading station 100 comprises suitable sensors to detect the weight and/or the presence of the fed raw material (aggregate) from the storage silo, said sensors being controlled by the management unit MU in order to generate a signalling if the raw material contained in one or more of said storage silos 120 is finished or below a predetermined threshold value.

In an embodiment, the maximum and minimum level values are detected with the stationary dosing belt, through the loading cells present on each of the tanks of the hopper 162.

If a storage silo 120 is depleted, the management unit MU is configured to automatically control the feeding of the related tank of the hopper 162 using the storage silo 120 and the conveyor belt 161 arranged on the opposite side with respect to the tank to be fed, and can automatically order the replacement.

The replacement of the depleted storage silo then takes place in the above-described way. Instead, regarding the removal of the depleted storage silo 120, before proceeding to the loading thereof on the semitrailer, it is requested that the operator disconnects the attachment means (such as for example the magnetic coupling holder and the compressed air holder) present in each terminal 120' of the aggregate storage area 121. The light signal of the luminous signalling element in this case turns off and the aggregate silo substitution message, which is previously appeared on the computerized means 200 of the transport means, is as read. As last step, it is requested that a detector RF-ID UHF detects the outlet of the depleted stored silo 120 of the plant, otherwise, the management unit MU is configured to activate the alarms described above.

As illustrated in the detail of figure 3, in an embodiment, a fibre dispenser 175, which is activated by the management unit MU when the production recipe provides it, is present at the end of the extractor belt 163. In particular, regarding the loading of the fibres, in an embodiment, the fibre dispenser 175 is arranged over the extractor belt 163 after the fourth tank of the hopper 162. If the recipe provides it, the management unit MU activates suitable motorized means of the fibre dispenser 175, stopping it a few seconds before the aggregate loading stops in order to allow the total depletion of the belts.

Instead regarding the management of the binders, it takes place in a similar way to what was seen above regarding the aggregates, however, having some peculiar aspects.

In particular, the order of the desired binder is sent to the supplier, for example through the management unit MU in a similar way to what happens for the aggregates, after receiving the order and/or when is detected via sensors that the raw materials in the storage silos are quite depleted. When said binder arrives (which is transported on a designated transport means) at the loading station 100, the person designated for the transports positions said transport means on the weighbridge 130, for example after opening the inlet bar by the pressure sensor, as previously seen for the aggregates. At this moment, (for example via a touch-screen panel at the weighbridge 130) the designated person is requested to insert the following data: supplier choice, number of the transport document (DDT), product code signalled in the DDT, for example selectable among a list of codes, with confirmation request, and the weight signalled by the supplier.

In an embodiment, the management unit MU is adapted to verify if the above-mentioned manually inserted code is correct and corresponds to the code expected for the ordered binder. If so, the inlet bar to the loading station 100 is opened in order to allow the entering of the transport mean for feeding the desired binder.

As indicated above, referring now again to figure 2, the storage silos 110 for the binders are in the binder storage area 111 of the loading station 100, said area comprising a plurality of inlet ports 112 (also called sleeves) for feeding the desired binder present on the transport means inside the storage silos 110.

If the above-mentioned procedures correctly take place, the management unit MU enables the activation of a light signal emitted by a luminous signalling element prearranged on a determined inlet port 112 which the operator can use to connect the pipe of its own means and then feed the binder in the storage silo 110 dedicated for that particular fed binder. Simultaneously, the management system MU enables the opening of a valve (for example an electropneumatic valve or any type of suitable valve) present in the feeding line designated for the binder entering from the enabled feeding port 112 towards the storage silo 110. The remaining valves related to the other inlet ports 112 remain close, such that it is not possible for the operator to feed a wrong storage silo 110.

In other words, summing up the above, the loading station 100 comprises a plurality of inlet ports 112 for feeding the raw materials (in particular the binders) to the storage silos 110, each inlet port 112 being associated with a determined binder to be fed in a determined storage silo 110. The management unit MU is configured to generate an order of a binder as determined by the production recipe, verify if the provided raw material corresponds to the expected raw material (for example by verifying if the code inserted by the operator is the correct one), enable, based on said verification, the opening of a determined inlet port 112 and control the closing of the remaining inlet ports, and finally signal said enabled inlet port 112 with luminous signalling elements, in order to ease the work of the operator and avoid errors. A luminous signalling element is present for each inlet port 112; the inlet ports 112 can be arranged in any suitable way in the binder storage area 111, what matters is that they are easily reachable by the trucks and that each is connected to the respective storage silo.

Once the feeding of the binder in the storage silo 110 designated thereto is completed, it is requested that the operator positions the outgoing transport means on the weighbridge 130 to verify the tare and allow the system to compare said value with the weight verified at the inlet, opening the outlet bar when the measured weight is according to the tare (and possibly proceeding with the accounting in the management software). In other words, the loading station 100 comprises weighing means, such as indeed the weighbridge 130, configured to measure the weight of raw materials transport means entering the loading station 100 before and after the delivering of said raw materials; the management unit MU is suitably configured to verify if the difference between the measured weight before the delivering of the raw materials and the weight measured after the delivering of the raw materials substantially corresponds to the weight of the raw materials as provided by the order and the production recipe.

The same procedure for entering the loading station 100 is provided also for the fuel suppliers, each of which will have a storage cistern 179 dedicated for this purpose. In this way, once the data required at the moment of the detection of the gross weight are inserted, as seen above for the binders, a light signal is turned on in front of the storage cistern 179 designated for that supplier.

Suitably, the loading station 100, based on the production recipe determined by the order, under the control of the management unit MU, is thus able to discriminate the type and control the binder quantity to be used.

More in particular, in an embodiment of the present invention, the loading station 100 comprises two binder feeding lines: one for the white ones and one for the gray ones. In the example of figure 2, the feeding line of the white binders is located to the left of the binder storage area 111, while the feeding line of the gray binders is located to the right of the binder storage area 111. Each line comprises three storage silos 110 (one for each type of white binders and gray binders); the binder feeding area further comprises a storage silo 110' (arranged for example in central position between said lines, as represented in figure 2) adapted to contain a powder additive which, for example by two metering screws, supplies both the above-mentioned binder lines. Obviously other configurations are possible.

In an embodiment, each storage silo 110 is connected with the respective inlet port 112 as previously described for the loading of the respective binder; a fluidifying electrovalve can also be present, as well as a metering screw for loading the binder towards a mixer 113 (one for each line). Both the binder lines are further provided with a group of a propeller 114 (one for each line) and a dust collector 116 (which can be common to both the lines). In an embodiment, the dust collector 116 can be positioned away from the binder storage area 111, for example can be at the conveyor 170. The mixer 113, which is positioned above the propeller 114, is provided with three loading cells which allow to precisely quantify the quantity of mixed material.

Through the opening of a valve, such as for example an electropneumatic knife gate valve actuated at 24 V, the material from the mixer 113 is droopingly conveyed in the propeller 114. The mixer 113 and the propeller 114 are then connected to the dust collector 116.

The propeller 114 is configured to pneumatically pump the raw materials pre-mixed in the mixer 113 towards the construction site movable silo 10 preselected by the management system MU, which, for this purpose, controls flow pneumatic deflectors with centralized opening, thus allowing to reach said construction site movable silo 10 to be loaded without disconnecting the pipes.

At each pumping cycle of the propeller 114, the compressed air continues its pushing until the complete depletion thereof and of all the pipes of the loading station 100 and also the one of the movable silo 10 up to the inside thereof, in order not to create obstructions and not to pollute the following loading operations. To this purpose, each movable silo 10 comprises a full load safety sensor connected with the management unit MU in order to stop the propeller 114 if there is an error in the quantification made by the loading cells of the mixer 113. This sensor is positioned such that, once an alarm is activated, the depletion of the pipes as described above can be guaranteed.

In general, it can be thus said that the management unit MU is suitably configured to control the loading station 100 in each loading means thereof, said loading station 100 being adapted to automatically load, by the above-mentioned loading means, the chambers of the movable silo 10 based on the instructions of said management unit MU, as provided by the production recipe. The loading means can comprise all the above-mentioned means illustrated above, starting from the storage silos 110 and 120 and the connections thereof, the hopper 162, the conveyor belt 161 and the belt 163, the mixer 113 and the propeller 114, the conveyor 175, the swinging belt 171, all the connection means of the storage silos, the signalling elements in the aggregate and binder storage areas, the dust collector, the fibre management system, the loading grid 180 and the operation thereof and still others, which cooperate with each other and are automatically controllable to fill the movable silos 10 based on specific recipes.

It can be observed that, as clear by the present invention, these aspects of the loading station 100 can be considered as independent from the specific configuration of the movable silos 10 and of the mixing and pumping stations 1000; the single aspects are also independent from each other (such as for example the automated management of the supply of the raw materials in order to avoid errors by the operators, for example at the parking terminals of the aggregates and of the inlet ports of the binders), unless specifically indicated otherwise. In the same way, as will be observed in the following, also the aspects of the mixing and pumping station 1000 are independent from the specific control of the loading means and the movable silos. In general, they can cooperate with each other to obtain a synergic effect, as well as they present alone many advantages, still thanks to the specific configuration of the management unit MU. In general, the management unit MU can be integrated in the loading central station 100 but it can also be a remote unit arranged in any suitable position.

The loading station 100 can furthermore comprise reservoirs 195 (for example two reservoirs) for the loading of water in the third chamber 11c of the movable silo 10.

The quantity of raw materials in the storage silos is detected by suitable sensors. For example, there are, for the aggregates, material presence sensors at the conveyors as well as loading cells at the hopper, while there are level sensors in the storage silos for the binders.

As mentioned, the loading station 100 comprises a plurality (for example fifteen) terminals 180' which are preferably arranged in a radial pattern for housing the construction site movable silos 10, each provided with suitable attachment means such as for example a magnetic attachment holder for connecting the sensors of the movable silos 10, an electrovalve for controlling the waterline from autoclaves, and a luminous signalling element, and similar. The loading central station 100 thus comprises the loading grid 180 of the movable silos 10. The loading grid 180 comprises the plurality of terminals 180' for a corresponding plurality of movable silos 10, said management unit MU being configured to manage the loading of each movable silo MU independently from the other movable silos based on the instructions of the production recipes.

In an embodiment of the present invention, the construction site movable silos 10 parked on the loading grid 180 are connected to the loading station 100 via the above-mentioned magnetic attachment holder which every terminal 180' is provided with. On the construction site, the movable silo 10 is instead connected to the loading station 100 thanks to the connection thereof with the mixing/pumping station 1000 present on site (for example via the cable TXc of figure 1), in turn connected to the loading station 100 for example through a GSM card incorporated therein. In other words, in an embodiment of the present invention, the management unit MU is located at the loading station 100 and the mixing and pumping station 1000 comprises own data reception/transmission means (indicated as TX3 in the figure 2) from/to the management unit MU for an operative communication therewith, while the movable silos 10 communicate with said loading station 100 via said mixing and pumping station 1000. In addition or alternatively, the movable silos 10 comprise the own data reception/transmission means TX1 from/to the management unit MU for a direct operative communication therewith, as previously observed.

Furthermore, each movable silo 10 comprises electric contacts on binder loading and vent sleeves and, if it is present, also the third chamber 11c, on the water attachment.

In a non-limiting embodiment, it is provided that the personnel designed for the transports, once the movable silo 10 is positioned on the loading grid 180 when returning from the construction site, connects it, within a predetermined amount of time, to the following utilities which are prearranged in each of the various terminals 180' of said loading grid 180: a magnetic attachment holder for the connection to the electric line (for example at 24 V), a connection tube to the binder loading sleeve, a connection powder-downflowing tube to the vent sleeve, a water feeding tube for the reservoirs of the movable silo 10.

In an embodiment, if the above-mentioned operations are not carried out within the predetermined amount of time (which can be counted starting from the moment in which the sensor detects the passage of the movable silo 10 from the construction site to the inlet of the loading station 100), the management unit MU generates a sound alarm via acoustic signalling means and/or a sound alarm via the luminous signalling element, said alarms ending only when the above-mentioned utilities are connected, without any exception.

In other words, the loading station 100 comprises, at the loading grid 180, attachment means at each loading terminal 180' for the movable silos 180', such as for example the magnetic attachment holder for connecting to the electric line, the connection tube to the binder loading sleeve, a powered outflowing tube to the exhaust sleeve, a water feeding tube for the reservoirs; the management unit MU is thus configured to verify the correct connection of said movable silos 10 to said attachment means at the respective loading terminal 180' and possibly control the activation of alarm signals if some operation does not occur as established.

In this way, if the coupling operations of the silo are not taking place in a correct way (for example within a predetermined amount of time as described above), the activation of a sound alarm and possibly the failing turning off of the luminous signalling element is commanded.

The failing coupling of the binder loading and vent tubes with the sleeves of the movable silo 10 furthermore determines the blocking of the loading of the binders.

If a wrong movable silo 10 is then taken out, the opening of the outlet bars of the loading station 100 is not allowed for the transport means, thanks to a detection system of said silo (for example RF-ID UHF at the outlet of the loading station). It can be observed that, in an embodiment, this is provided also for the storage silos 120.

It is thus clear that the management unit MU manages each step in an optimal way avoiding any type of error.

It can be furthermore observed that, according to the present invention, the management unit MU is furthermore configured to select the number of movable silos of the plurality of movable silos 10 to be filled and successively taken out based on the product recipe. Generally, as previously described, it is provided that at least two movable silos 10 are filled and taken out for a determined product.

Furthermore, as mentioned herein several times, advantageously according to the present invention, the system 1 comprises also the mixing and pumping station 1000, which is configured to receive the raw materials of the chambers of the movable silo 10 for mixing and successively pumping them for the laying on the construction site. Only by way of example, four mixing and pumping stations 1000 with the same amount of management boards can be provided.

In an embodiment of the present invention, the mixing and pumping station 1000 comprises a pump body 1010 positioned on a platform 1020 provided with sensors 1030, such as for example loading cells (preferably four loading cells) configured to measure the weight of the raw materials fed from the chambers of the movable silo 10 (as will be observed in the following, the platform and the sensors can be not present, said sensors can be for example arranged on the movable silo 10); the mixing and pumping station 1000 is in operative connection with the management unit MU via own data reception/transmission means TX3, said management unit MU being configured to automatically control the taking out of the raw materials from the construction site movable silo 10 and in the proportion provided by the production recipe.

The mixing of the raw materials and the pumping of the raw materials take place thanks to designated means, such as for example a mixing chamber (or mixer) in the pump body 1010 provided with blades which are put into rotation by a rotation shaft, and pumping means for laying the mixture communicating with said mixing chamber.

Advantageously according to the present invention, the management unit MU is adapted to automatically control the taking out of the raw materials from the chambers of the movable silo 10 and the introduction thereof in the mixing and pumping station 1000 based on the production recipe thanks to the specific sensors (for example the above-mentioned loading cells arranged under the platform 1020), such that the quantities and/or proportions (that is the correct dosage) of the raw materials taken out from said chambers and mixed with each other are according to the instructions of the production recipe and cannot be modified on site by the operators responsible for the laying.

The recipe can be remotely modified via the management unit MU, if necessary.

If the environment limit parameters set by the management unit MU are exceeded (for example in case of an excessively low temperature), said management unit MU is programmed to immediately stop the mixing and pumping station 1000 by ending the ongoing pumping cycle, by depleting the pipes up to the laying plane and finally start a washing cycle thereof. In other words, in an embodiment of the present invention, the system 1, in particular (but not necessarily) the mixing and pumping station 1000, comprises sensors adapted to detect environmental parameters in the construction site area, said sensors being operatively coupled with the management unit MU, which is configured to interrupt the operation of said mixing and pumping station 1000 if the detected parameters exceed or are equal to a determined threshold value, without the possibility of error by an operator on the construction site.

The management unit MU thus has multiple functionalities, among which the ability to control the block and the reboot of the mixing and pumping stations 1000 on the construction site if, for example, the environmental parameters are outside the set tolerances and excluding the possibility by the personnel present on the construction site to force the orders given by the management unit.

The mixing and pumping station 1000 can be rebooted, in case of urgent need, only by the management unit MU, or by other means which are specifically enabled by said management unit MU.

In normal conditions, the turning on of the mixing and pumping station 1000 is started by the operator, for example by a touch-screen panel, once it has been verified that all the functions are activated on the display of the control board. In an embodiment of the present invention, the mixing and pumping station 1000 can be also remotely controlled by the operator, for example through a radio control. The radio control can control the following functions: turning on cycle, turning on pumping, turning off pumping, percentage displaying of material still contained in the mixer, adjusting a litre-counter with a maximum tolerance of ± 5 litres for each pumping and displaying, remote starting of the washing cycle with opening/closing of the valves and possibly turning on of the mega-cube pump for recovering water, displaying cycles which are still available in the construction site movable silo 10, for example following the reading of the values of the sensors 11as, 11bs and 11cs. Clearly, the above-mentioned advantageous functionalities can be started also without the aid of a radio control.

In an embodiment, once the mixing and pumping station 1000 has been started, the construction site movable silo 10 starts to, successively, unload aggregate and binder with the control of the weights defined by the recipe through sensors 1030 placed under the platform 1020 of the mixing and pumping station 1000, as described above. In other words, the mixing and pumping station 1000 comprises one or more sensors 1030 configured to weight the raw materials taken out from the chambers of the movable silo 10, such as for example the loading cells arranged on the base platform 1020, and wherein the quantity and/or proportion of the mixed raw materials is established based on the signals of said sensors 1030.

In an embodiment of the present invention, water and additives are dosed through an electromagnetic impulse litre-counter pump, still based on the predetermined production recipe for the product defined by the order.

When the sensors 1030 detect only the weight of the tare of the body of the mixing and pumping station 1000, it means that the previously mixed material was completely pumped, and a new cycle will be therefore rebooted.

The electric board of the mixing and pumping station 1000 includes a touch-screen control panel and a PLC automatically manages the production recipe received by the management unit MU (for example via GSM card) and provides thereto all the information regarding the construction site or the material quantity taken out from each movable silo 10.

As mentioned, in an additional or alternative embodiment of the present invention, the weight sensor (for example loading cells) is present also at the base of each movable silo 10 (see for this reason the reference 14 of figure 1), such that the dosing of the mixed raw materials can take place based on the weight measured by the sensors on the movable silo 10, that is based on the detected reduction of the weight of said movable silo 10 during the taking out of the raw materials.

Furthermore, as previously mentioned, in an advantageous embodiment of the present invention, the mixing and pumping station 1000 is configured to perform an automatic washing cycle thereof, said automatic washing cycle being remotely controllable via the management unit MU.

In particular, in this embodiment, the mixing and pumping station 1000 comprises a washing pump designated for this purpose (wherein the arrangement of this washing pump is not important), which is configured to inject (for example under control of the management unit MU) washing water in the pump body, for example in the mixing chamber and/or in the connected pumping means, said high-pressure washing water being introduced inside the pump body to be washed thanks to a suitable hole formed on the rotation shaft of the blades of the mixer. In this way, it is possible to perform an efficient high-pressure washing, possibly recovering the washing water in suitable containers connected to the outlet.

The high-pressure pump can be activated after specific events or automatically at each predetermined time range, in order to always guarantee the best performances and a high quality of the laid building material.

As clear from the description, it can be furthermore observed that, in relation to the mixing and pumping station 1000, all the above-listed aspects are independent from the particular configuration of the movable silo 10 and of the loading station 1000, what matters is that said mixing and pumping station 1000 is configured and has the functionalities as illustrated above to mix the raw materials from the chambers of the movable silo 10. An aspect of the present invention is thus related only to the mixing and pumping station 1000, which is configured to carry out many advantageous functionalities and comprises components designated for such purpose.

In general, it can be thus said that mixing and pumping station 1000 comprises a body 1010 and a control unit CU configured to communicate with the management unit MU (for example via the means TX3) and perform all the advantageous above-mentioned functionalities, including the above-mentioned automatic washing. The body 1010 comprises inlet ports of the raw materials (including water), means for mixing the raw materials, such as for example the mixing blades, and the means which are necessary to pump the mixture produced by the mixing means in the laying area. An inlet port for high-pressure washing water can also be provided.

Another advantageous aspect of the present invention relates to the management of the logistics and transport of the movable silos 10 of the loading central station 100 to the construction site area. Each transport means is indeed provided with computerized means, indicated with the reference 200 as seen above, which can comprise for example a tablet in the guide cabin, said computerized means 200 being in operative communication with the management unit MU via own data reception/transmission means TX4. The management unit MU is configured to generate transport instruction communicated to said computerized means 200, said information being generated based on the information provided thereto, for example from the sensors on the construction site on the movable silo 10 and/or on the mixing and pumping station 1000.

For example, in an embodiment of the present invention, the transport instructions are generated based on the quantity of raw materials in the chambers of the silos 10, such that the management unit MU is able to determine how many cycles remains inside a movable silo 10 and thus optimizes the paths of the transport means based on these information, with considerable time and cost saving; the travel instructions based on the detections thus optimizing the taking out and transport operations of the movable silos 10.

Also this invention aspect related to the management of the logistics is per se independent from the structure and configuration of the silos 10, of the station 100 and of the station 1000, even if a considerable synergic effect is given together with these components, as clear from the previous description.

Finally, it can be observed that the present invention is also related to a production process of a building material, said process comprising the processing preliminary step of a production recipe (which contains instruction related to the production of the building material), and the selection step, by the management unit MU, of the raw materials to be loaded inside the chambers of the movable silo 10 based on said received production recipe.

There is then an automatic control step, via the management unit MU, of the loading means of the loading station 100 in order to proceed to the loading of the raw materials selected in the chambers of the movable silo 10. The loaded movable silo 10 is successively taken out and transported on the construction site, as previously described.

A control step of the taking out of the raw materials of the chambers of the movable silo 10 based on the production recipe is then performed on the construction site, still under the control of the management unit MU, wherein the quantity and/or proportions (generally the dosage) of the raw materials taken out from the chambers of the movable silo 10 are automatically defined based on the instructions of the production recipe and controlled by the management unit MU, for example based on signals from suitable weight sensors (for example loading cells). There is then a mixing step of the raw materials from the movable silo 10 by the mixing and pumping station 1000. The process finally ends with the laying of the building material obtained by the mixing.

Thanks to this process, it is possible to produce innovative materials, in a fast way, which are certified and in each desired quantity.

To conclude, the present invention provides a system for producing building materials which comprises an automated loading station, construction site movable silos and mixing and pumping stations which are in permanent communication with each other thanks to a management unit arranged for example at the loading station, said management unit being able to automatically manage a plurality of orders (consequently changing the recipes for the single silos) to obtain a plurality of products to be produced, and being furthermore able to manage the subsequent loading steps of the movable silos and the transport logistics thereof, as well as to control the mixing/pumping steps on the construction site and order the taking out of the depleted silos providing for the substitution thereof with full silos. In particular, the loading of each silo automatically takes place based on the production recipe processed by the management unit according to what is determined by the order (for example automatically provided by the corporate management software), as well as the taking out of the raw materials from said silos (which comprise at least two chambers separated from each other) is automatically and innovatively managed by precisely controlling the quantity and proportions of the taken-out raw materials to be mixed on the construction site in the mixing and pumping station, such that an operator cannot vary the production parameters set by the production recipe; also the taking out and transport steps of the silos on the construction site are managed in a completely automated way by the management unit, with sending of all the suitable instructions to the drivers based on the production recipe and/or the progress of the works/production on the construction site. In this way, an automated system is obtained in which a silo is no more a simple material container, but an intelligent machine which is able to efficiently communicate with the other components of the system thanks to the management unit, by controlling all the process steps up to the laying of the construction material to be produced, and wherein, furthermore, it does not contain pre-mixed material, but raw materials to be mixed on the construction site.

The construction site movable silos, once the point of use on the construction site has been reached, are connected to the mixing and pumping station, which is connected to the loading station for example through a GSM card for the continuous remote order and information exchange such as, for example, the quantity of raw materials still present inside the chambers of the silos, the environment parameters detected on the construction site, the pumping cycles carried out up to that moment, the production recipe to be mixed for the order, remote assistance operations, the blocking of the operation of the mixing and pumping station for various reasons, such as for example the exceeding of the minimal and maximal tolerances set for the temperature.

Advantageously according to the present invention, an innovative system is obtained having an optimized management of all the components and all the process steps, in which each possible human error is avoided.

For example, the precise control of the dosage during the taking out of the raw materials to be mixed on the construction site (obtained for example by weight sensors on the mixing and pumping station and/or on the movable silo itself) allows to avoid that the designated operator can make errors while dosing or to vary the process parameters set based on the production recipe: it is in fact not possible to modify the composition set by the recipe, since all is managed in a automated and efficient way by the management unit, thus obtaining a truly certified building material which the operator can than lay in the set point. This is possible also thanks to the fact that each movable silo comprises at least two separated chambers for transporting the raw materials on the construction site, which thus arrive on the construction site separated from each other and are not previously mixed.

There are many strengths of the present invention, starting from the presence of the movable silos communicating with the loading station and the mixing and pumping stations (generally communicating with the management unit), the partition in two or three chambers of the construction site movable silos, the presence of the pumping station managed by the management unit (which can be installed at the loading station), the continuous control of the weights of the raw materials taken out to guarantee the certification on the construction site of the products, the automatic washing of the pump mixer unit, the automated management of the loading station (ingoing material, recipe management, outgoing silos, management of pumping central stations), for example with innovative software interconnected with the traditional corporate management software, as well as the automated logistics. Al these aspects contribute, alone or in combination with each other, to solve the technical problem and obtain the many advantages mentioned in this description.

## Claims

1. A system (1) for producing building materials, comprising:
- at least one movable silo (10) adapted to contain raw materials to be mixed, said movable silo (10) comprising at least two chambers (11a, 11b, 11c) which are separated from each other and adapted to contain a respective raw material;
- a loading station (100) comprising loading means adapted to load the raw materials in the chambers (11a, 11b, 11c) of the movable silo (10); and
- a management unit (MU) configured to:
- process a production recipe containing instructions related to the production of a building material; and
- automatically control the loading means of the loading station (100) based on said production recipe, said loading means being thereby adapted to load the raw materials into the chambers (11a, 11b, 11c) of the movable silo (10) based on instructions of the management unit (MU),
said system (1) further comprising at least one mixing and pumping station (1000) configured to receive the raw materials from the chambers (11a, 11b, 11c) of the movable silo (10) for the mixing and following pumping thereof,
wherein the management unit (MU) is further configured to automatically control, based on the production recipe, the dosage of the raw materials taken out from the chambers (11a, 11b, 11c) of the movable silo (10) transported in a construction site for the mixing thereof in the mixing and pumping station (1000) in the construction site.

2. The system (1) according to claim 1, wherein the loading station (100) comprises a first plurality of storage silos (110), which are adapted to contain binders, and a second plurality of storage silos (120), which are adapted to contain aggregates.

3. The system (1) according to claim 2, wherein the loading station (100) comprises sensors which are controlled by the management unit (MU) to generate, based on signals of said sensors, a signalling if a raw material contained in one or more of said storage silos (110, 120) is finished or below a predetermined value.

4. The system (1) according to claim 2 or 3, comprising, at the loading station (100), a plurality of inlet ports (112) for feeding binders to the storage silos (110) adapted to contain binders, each inlet port (112) being associated to a determined binder to be fed, wherein the management unit (MU) is configured to:
- verify if a provided binder corresponds to the one expected based on the production recipe;
- based on said verification, enable the opening of a determined inlet port and control the closing of the remaining inlet ports; and
- activate a luminous signalling element of a plurality of luminous signalling elements of a binder storage area (111) of said loading station (100), said luminous signalling elements being adapted to signal said enabled inlet port.

5. The system (1) according to any one of the claims 2 to 4, wherein the loading station (100) comprises a plurality of attachment means for a corresponding plurality of storage silos (120) adapted to contain aggregates, the management unit (MU) being configured to:
- activate, based on the expected aggregate, a luminous signalling element of a plurality of luminous signalling elements adapted to signal to an operator the position of the set attachment means to which the storage silo (120) containing the expected aggregate is to be connected;
- enable the opening of an exhaust valve of the storage silo (120) if said storage silo (120) is connected to the set attachment means; and
- generate a warning signal and not enable the opening of the exhaust valve of the storage silo (120) if said storage silo (120) is not connected to the set attachment means and/or if said connection is not occurring within a predetermined amount of time.

6. The system (1) according to any one of the previous claims, wherein the loading station (100) comprises a weighting station (130) configured to measure the weight of transport means of raw materials, which enter said loading station (100), before and after the delivering of said raw materials, the management unit (MU) being configured to verify if the difference between the weight measured by said weighting station (130) before the delivering of the raw materials and the weight measured by said weighting station (130) after the delivering of the raw materials substantially corresponds to the weight of said raw materials as provided by the production recipe.

7. The system (1) according to any one of the previous claims, comprising, at the loading station (100), a loading grid (180) comprising a plurality of loading terminals (180') for a corresponding plurality of movable silos (10), the management unit (MU) being configured to manage the loading of each movable silo at one of said loading terminals (180') independently from the other movable silos based on the instructions of the production recipes.

8. The system (1) according to claim 7, wherein the management unit (MU) is further configured to select, based on the production recipe, the number of movable silos of the plurality of movable silos (10) to be filled and to be successively taken out.

9. The system (1) according to claim 7 or 8, wherein the loading station (100) comprises, at said loading grid (180), attachment means at each loading terminal (180') for the movable silos (10), the management unit (MU) being configured to verify the connection of said movable silos (10) to the attachment means at the respective loading terminal (180').

10. The system (1) according to any one of the previous claims, wherein the mixing and pumping station (1000) comprises sensors (1030) configured to weight the raw materials from the chambers (11a, 11b, 11c) of the movable silo (10), and wherein the dosage of the mixed raw materials is established based on the detection of said sensors (1030).

11. The system (1) according to any one of the previous claims, wherein
said system (1) comprises sensors adapted to detect environmental parameters in a construction site area, said sensors being operatively coupled with the management unit (MU), wherein said management unit (MU) is configured to interrupt the operation of the mixing and pumping station (1000) if the environmental parameters detected via said sensors exceed or are equal to a determined threshold value and/or
the mixing and pumping station (1000) is configured to perform an automatic washing cycle thereof, said automatic washing cycle being remotely controllable via said management unit (MU).

12. The system (1) according to any one of the previous claims, wherein the movable silo (10) comprises at least one first chamber (11a) and a second chamber (11b) which follow each other along a longitudinal axis (H-H) of said movable silo (10), wherein the first chamber (11a) is adapted to contain aggregates and the second chamber (11b) is adapted to contain binders.

13. The system (1) according to claim 12, wherein the movable silo (10) further comprises a third chamber (11c) arranged between the first chamber (11a) and the second chamber (11b), said third chamber (11c) being adapted to contain liquids.

14. The system (1) according to any one of the previous claims, wherein the movable silo (10) comprises sensors (11as, 11bs, 11cs) configured to detect the level of the raw materials contained in the chambers (11a, 11b, 11c) of said movable silo (10), the management unit (MU) being further configured to monitor the quantity of the raw materials in said chambers (11a, 11b, 11c) of said movable silo (10) based on signals from said sensors (11as, 11bs, 11cs), said system (1) further comprising computerized means (200) adapted to be installed on transport means of the movable silo (10), said computerized mans (200) being in operative communication with the management unit (MU), which is configured to generate transport instructions communicated to said computerized means (200), wherein said transport instructions are generated based on the quantity of raw materials in the chambers (11a, 11b, 11c) of the movable silos (10) detected via the signals from said sensors (11as, 11bs, 11cs) in said chambers (11a, 11b, 11c), wherein the management unit (MU) is configured to estimate the number of remaining mixing and pumping cycles based on said detected quantity.

15. A production process of a building material, comprising the steps of:
- processing a production recipe containing instructions related to the production of the building material;
- based on said production recipe, automatically controlling loading means of a loading station (100) for loading raw materials in chambers (11a, 11b, 11c) of a movable silo (10);
- transporting the movable silo (10) in a construction site;
- controlling the taking out of the raw materials from the chambers (11a, 11b, 11c) of the movable silo (10) transported in the construction site based on the production recipe, wherein the dosage of the raw materials taken out from said chambers (11a, 11b, 11c) of said movable silo (10) is automatically defined based on the instructions of the production recipe;
- mixing the raw materials from the chambers (11a, 11b, 11c) of the movable silo (10) by means of a mixing and pumping station (1000) in the construction site; and
- laying the building material obtained by the mixing.

## Patentansprüche

1. System (1) zur Herstellung von Baumaterialien, umfassend:
- mindestens ein bewegliches Silo (10), das zur Aufnahme von zu mischenden Rohstoffen ausgelegt ist, wobei das bewegliche Silo (10) mindestens zwei Kammern (11a, 11b, 11c) umfasst, die jeweils voneinander getrennt sind und angepasst sind, ein jeweiliges Rohmaterial aufzunehmen;
- eine Ladestation (100) mit Ladevorrichtungen, die zum Laden der Rohmaterialien in die Kammern (11a, 11b, 11c) des beweglichen Silos (10) angepasst sind;
und
- eine Verwaltungseinheit (MU), die konfiguriert ist, zur:
- Verarbeitung eines Produktionsrezepts, das Anweisungen im Zusammenhang mit der Herstellung eines Baumaterials; und
- automatischen Steuerung der Ladevorrichtung der Ladestation (100) auf der Grundlage des Produktionsrezepts, wobei die Ladevorrichtung dazu angepasst ist, um die Rohmaterialien in die Kammern (11a, 11b, 11c) des beweglichen Silos (10) auf der Grundlage von Anweisungen der Steuereinheit (MU) zu laden, wobei das System (1) ferner mindestens eine Misch- und Pumpstation (1000) umfasst, die so konfiguriert ist, dass sie die Rohmaterialien aus den Kammern (11a, 11b, 11c) des beweglichen Silos (10) zum Mischen und anschließenden Pumpen aufnimmt,
wobei die Verwaltungseinheit (MU) ferner so konfiguriert ist, dass sie automatisch die Dosierung der Rohmaterialien aus den Kammern (11a, 11b, 11c) basierend auf dem Produktionsrezept des beweglichen Silos (10) steuert, das auf eine Baustelle transportiert wurde, um sie in der Misch- und Pumpstation (1000) auf der Baustelle zu mischen.

2. System (1) nach Anspruch 1, wobei die Ladestation (100) eine erste Vielzahl von Lagersilos (110) umfasst, die dazu ausgelegt sind, Bindemittel aufzunehmen, und eine zweite Vielzahl von Lagersilos (120), die zur Aufnahme von Zuschlagstoffen ausgelegt sind.

3. Das System (1) gemäß Anspruch 2, wobei die Ladestation (100) Sensoren umfasst, die von der Steuereinheit (MU) gesteuert werden, um auf der Grundlage von Signalen der Sensoren ein Signal erzeugt, wenn ein Rohmaterial in einem oder mehreren der Lagersilos (110, 120) aufgebraucht ist oder unter einen vorbestimmten Wert gefallen ist.

4. Das System (1) gemäß Anspruch 2 oder 3, umfassend an der Ladestation (100) eine Vielzahl von Einlassöffnungen (112) zum Zuführen von Bindemitteln zu den zum Aufnehmen von Bindemitteln angepassten Lagersilos (110), wobei jede Einlassöffnung (112) einem bestimmten zuzuführenden Bindemittel zugeordnet ist, wobei die Verwaltungseinheit (MU) konfiguriert ist, um:
- zu überprüfen, ob ein bereitgestelltes Bindemittel dem erwarteten Bindemittel gemäß dem Produktionsrezept entspricht;
- auf der Grundlage dieser Überprüfung das Öffnen einer bestimmten Einlassöffnung zu ermöglichen und das Schließen der übrigen Einlassöffnungen zu steuern; und
- ein Leuchtsignalelement einer Vielzahl von Leuchtsignalelementen eines Bindemittelspeicherbereichs (111) der Ladestation (100) zu aktivieren, wobei die Leuchtsignalelemente dazu ausgelegt sind, die freigegebene Einlassöffnung zu signalisieren.

5. Das System (1) gemäß einem der Ansprüche 2 bis 4, wobei die Ladestation (100) eine Vielzahl von Befestigungsmitteln für eine entsprechende Vielzahl von Lagersilos (120) umfasst, die zur Aufnahme von Zuschlagstoffen angepasst sind, wobei die Verwaltungseinheit (MU) so konfiguriert ist, dass sie:
- basierend auf dem erwarteten Zuschlagstoff ein Leuchtsignalelement von einer Vielzahl von Leuchtsignalelementen zu aktivieren, die dazu ausgelegt sind, einem Bediener die Position der festgelegten Befestigungsvorrichtung anzuzeigen, an die der Lagersilo (120), der den erwarteten Zuschlagstoff enthält, angeschlossen werden soll;
- das Öffnen eines Auslassventils des Lagersilos (120) ermöglicht, wenn das Lagersilo (120) mit der festgelegten Befestigungsvorrichtung verbunden ist; und
- ein Warnsignal erzeugen und das Öffnen des Auslassventils des Lagersilos (120) nicht zu ermöglichen, wenn das Lagersilo (120) nicht mit den Befestigungsmittel verbunden ist und/oder wenn diese Verbindung nicht innerhalb einer vorbestimmten Zeitspanne erfolgt.

6. Das System (1) gemäß einem der vorhergehenden Ansprüche, wobei die Ladestation (100) eine Wiegestation (130) umfasst, die so konfiguriert ist, um das Gewicht von Transportmitteln für Rohmaterialien zu messen, die in die Ladestation (100) gelangen, vor und nach der Anlieferung der Rohmaterialien, wobei die Verwaltungseinheit (MU) so konfiguriert ist, dass sie überprüft, ob der Unterschied zwischen dem von der Wiegestation (130) gemessenen Gewicht vor der Anlieferung der Rohmaterialien und dem von der Wiegestation (130) gemessenen Gewicht nach der Anlieferung der Rohmaterialien im Wesentlichen dem Gewicht der Rohmaterialien entspricht, wie es im Produktionsrezept vorgesehenen ist.

7. Das System (1) gemäß einem der vorhergehenden Ansprüche, umfassend an der Ladestation (100) ein Ladegitter (180) mit einer Vielzahl von Ladeterminals (180') für eine entsprechende Vielzahl beweglicher Silos (10), wobei die Verwaltungseinheit (MU) so konfiguriert ist, dass sie die Beladung jedes beweglichen Silos an einem der Ladeterminals (180') unabhängig von den anderen beweglichen Silos auf der Grundlage der Anweisungen der Produktionsrezepte verwaltet.

8. Das System (1) gemäß Anspruch 7, wobei die Verwaltungseinheit (MU) ferner so konfiguriert ist, dass sie auf der Grundlage des Produktionsrezepts die Anzahl der beweglichen Silos aus der Vielzahl von beweglichen Silos (10) auszuwählen, die befüllt und nacheinander entnommen werden sollen.

9. Das System (1) gemäß Anspruch 7 oder 8, wobei die Ladestation (100) an dem Ladegitter (180) Befestigungsmittel an jedem Ladeterminal (180') für die beweglichen Silos (10) umfasst, wobei die Verwaltungseinheit (MU) so konfiguriert ist, dass sie die Verbindung der beweglichen Silos (10) mit den Befestigungsmitteln an dem jeweiligen Ladeterminal (180') überprüft.

10. System (1) nach einem der vorstehenden Ansprüche, wobei die Misch- und Pumpstation (1000) Sensoren (1030) umfasst, die so konfiguriert sind, dass sie die Rohmaterialien aus den Kammern (11a, 11b, 11c) des beweglichen Silos (10) zu gewichten, und wobei die Dosierung der gemischten Rohstoffe Materialien auf der Grundlage der Erfassung durch die Sensoren (1030) festgelegt wird.

11. System (1) nach einem der vorstehenden Ansprüche, wobei das System (1) Sensoren umfasst, die dazu ausgelegt sind, Umgebungsparameter in einem Baustellenbereich zu erfassen, wobei die Sensoren funktionsfähig mit der Verwaltungseinheit (MU) gekoppelt sind, wobei die Verwaltungseinheit (MU) konfiguriert ist, den Betrieb der Misch- und Pumpstation (1000) zu unterbrechen, wenn die über die Sensoren erfassten Umgebungsparameter einen festgelegten Schwellenwert überschreiten oder diesem entsprechen und/oder
die Misch- und Pumpstation (1000) so konfiguriert ist, dass sie einen automatischen Waschzyklus durchzuführen, wobei der automatische Waschzyklus über die Verwaltungseinheit (MU) fernsteuerbar ist.

12. System (1) nach einem der vorstehenden Ansprüche, wobei das bewegliche Silo (10) mindestens eine erste Kammer (11a) und eine zweite Kammer (11b) umfasst, die entlang einer Längsachse (H-H) des beweglichen Silos (10) aufeinander folgen, wobei die erste Kammer (11a) zur Aufnahme von Zuschlagstoffen ausgestaltet ist und die zweite Kammer (11b) zur Aufnahme von Bindemittel ausgestaltet ist.

13. System (1) nach Anspruch 12, wobei das bewegliche Silo (10) weiterhin eine dritte Kammer (11c) umfasst, die zwischen der ersten Kammer (11a) und der zweiten Kammer (11b) angeordnet ist, wobei die dritte Kammer (11c) zur Aufnahme von Flüssigkeiten ausgestaltet ist.

14. System (1) nach einem der vorstehenden Ansprüche, wobei das bewegliche Silo (10) Sensoren (11as, 11bs, 11cs) umfasst, die so konfiguriert sind, dass sie den Füllstand der Rohmaterialien in den Kammern (11a, 11b, 11c) des beweglichen Silos (10) zu erfassen, wobei die Verwaltungseinheit (MU) ferner konfiguriert ist, um die Menge der Rohmaterialien in den Kammern (11a, 11b, 11c) des beweglichen Silos (10) auf der Grundlage von Signalen von den Sensoren (11as, 11bs, 11cs) zu überwachen, wobei das System (1) ferner eine computergesteuerte Einrichtung (200), die zur Installation an einer Transporteinrichtung des beweglichen Silos (10) angepasst ist, wobei die computergesteuerten Mittel (200) in mit der Verwaltungseinheit (MU) in operativer Verbindung stehen, die so konfiguriert ist, dass sie Transportanweisungen generiert, die an die Mittel (200) übermittelt werden, wobei die Transportanweisungen auf der Grundlage der Menge an Rohmaterialien in den Kammern (11a, 11b, 11c) der beweglichen Silos (10) erzeugt werden, die über die Signale von den Sensoren (11as, 11bs, 11cs) in den Kammern (11a, 11b, 11c) erfasst werden, wobei die Verwaltungseinheit (MU) so konfiguriert ist, dass sie die Anzahl der verbleibenden Misch- und Pumpzyklen auf der Grundlage der erfassten Menge schätzt.

15. Herstellungsverfahren für ein Baumaterial, umfassend die folgenden Schritte:
- Verarbeiten eines Produktionsrezepts, das Anweisungen in Bezug auf die Herstellung des Baumaterials enthält;
- auf der Grundlage des Produktionsrezepts automatisches Steuern der Lademittel einer Ladestation (100) zum Laden von Rohmaterialien in Kammern (11a, 11b, 11c) eines beweglichen Silos (10);
- Transportieren des beweglichen Silos (10) auf einer Baustelle;
- Steuern der Entnahme der Rohmaterialien aus den Kammern (11a, 11b, 11c) des auf die Baustelle transportierten beweglichen Silos (10) auf der Grundlage des Produktionsrezepts, wobei die Dosierung der aus den Kammern (11a, 11b, 11c) des beweglichen Silos (10) entnommen Rohmaterialien automatisch auf der Grundlage der Anweisungen des Produktionsrezepts festgelegt wird;
- Mischen der Rohmaterialien aus den Kammern (11a, 11b, 11c) des beweglichen Silos (10) mittels einer Misch- und Pumpstation (1000) auf der Baustelle; und
- Verlegen des durch das Mischen erhaltenen Baumaterials.

## Revendications

1. Système (1) pour la production de matériaux de construction, comprenant:
- au moins un silo mobile (10) adapté pour contenir des matières premières à mélanger, ledit silo mobile (10) comprenant au moins deux chambres (11a, 11b, 11c) qui sont séparées l'une de l'autre et adaptées pour contenir une matière première respective;
- une station de chargement (100) comprenant des moyens de chargement adaptés pour charger les matières premières dans les chambres (11a, 11b, 11c) du silo mobile (10); et
- une unité de gestion (MU) configurée pour:
- traiter une recette de production contenant des instructions liées à la production d'un matériau de construction; et
- commander automatiquement les moyens de chargement de la station de chargement (100) sur la base de ladite recette de production, lesdits moyens de chargement étant ainsi adaptés pour charger les matières premières dans les chambres (11a, 11b, 11c) du silo mobile (10) sur la base des instructions de l'unité de gestion (MU),
ledit système (1) comprenant en outre au moins une station de mélange et de pompage (1000) configurée pour recevoir les matières premières provenant des chambres (11a, 11b, 11c) du silo mobile (10) pour leur mélange et pompage ultérieur,
dans lequel l'unité de gestion (MU) est configurée en outre pour commander automatiquement, sur la base de la recette de production, le dosage des matières premières retirées des chambres (11a, 11b, 11c) du silo mobile (10) transportées sur un chantier de construction pour leur mélange dans la station de mélange et de pompage (1000) sur le chantier de construction.

2. Système (1) selon la revendication 1, dans lequel la station de chargement (100) comprend une première pluralité de silos de stockage (110), qui sont adaptés pour contenir des liants, et une deuxième pluralité de silos de stockage (120), qui sont adaptés pour contenir des agrégats.

3. Système (1) selon la revendication 2, dans lequel la station de chargement (100) comprend des capteurs qui sont commandés par l'unité de gestion (MU) pour générer, sur la base de signaux desdits capteurs, une signalisation si une matière première contenue dans un ou plusieurs desdits silos de stockage (110, 120) est épuisée ou inférieure à une valeur prédéterminée.

4. Système (1) selon la revendication 2 ou 3, comprenant, au niveau de la station de chargement (100), une pluralité d'orifices d'entrée (112) pour alimenter en liants les silos de stockage (110) adaptés pour contenir des liants, chaque orifice d'entrée (112) étant associé à un liant déterminé à alimenter, dans lequel l'unité de gestion (MU) est configurée pour:
- vérifier si un liant fourni correspond à celui attendu sur la base de la recette de production;
- sur la base de ladite vérification, autoriser l'ouverture d'un orifice d'entrée déterminé et commander la fermeture des orifices d'entrée restants; et
- activer un élément de signalisation lumineux d'une pluralité d'éléments de signalisation lumineux d'une zone de stockage de liants (111) de ladite station de chargement (100), lesdits éléments de signalisation lumineux étant adaptés pour signaler ledit orifice d'entrée autorisé.

5. Système (1) selon l'une quelconque des revendications 2 à 4, dans lequel la station de chargement (100) comprend une pluralité de moyens de fixation pour une pluralité correspondante de silos de stockage (120) adaptés pour contenir des agrégats, l'unité de gestion (MU) étant configurée pour:
- activer, sur la base de l'agrégat attendu, un élément de signalisation lumineux d'une pluralité d'éléments de signalisation lumineux adapté pour signaler à un opérateur la position des moyens de fixation définis auxquels le silo de stockage (120) contenant l'agrégat attendu doit être connecté;
- autoriser l'ouverture d'une vanne de vidange du silo de stockage (120) si ledit silo de stockage (120) est connecté aux moyens de fixation définis; et
- générer un signal d'alerte et ne pas autoriser l'ouverture de la vanne de vidange du silo de stockage (120) si ledit silo de stockage (120) n'est pas connecté aux moyens de fixation définis et/ou si ladite connexion ne se produit pas dans un délai prédéterminé.

6. Système (1) selon l'une quelconque des revendications précédentes, dans lequel la station de chargement (100) comprend une station de pesage (130) configurée pour mesurer le poids des moyens de transport des matières premières, qui entrent dans ladite station de chargement (100), avant et après la fourniture desdites matières premières, l'unité de gestion (MU) étant configurée pour vérifier si la différence entre le poids mesuré par ladite station de pesage (130) avant la fourniture des matières premières et le poids mesuré par ladite station de pesage (130) après la fourniture des matières premières correspond essentiellement au poids desdites matières premières tel que prévu par la recette de production.

7. Système (1) selon l'une quelconque des revendications précédentes, comprenant, au niveau de la station de chargement (100), une grille de chargement (180) comprenant une pluralité de terminaux de chargement (180') pour une pluralité correspondante de silos mobiles (10), l'unité de gestion (MU) étant configurée pour gérer le chargement de chaque silo mobile au niveau d'un desdits terminaux de chargement (180') de manière indépendante des autres silos mobiles sur la base des instructions des recettes de production.

8. Système (1) selon la revendication 7, dans lequel l'unité de gestion (MU) est configurée en outre pour sélectionner, sur la base de la recette de production, le nombre de silos mobiles de la pluralité de silos mobiles (10) à remplir et à retirer successivement.

9. Système (1) selon la revendication 7 ou 8, dans lequel la station de chargement (100) comprend, au niveau de ladite grille de chargement (180), des moyens de fixation au niveau de chaque terminal de chargement (180') pour les silos mobiles (10), l'unité de gestion (MU) étant configurée pour vérifier la connexion desdits silos mobiles (10) aux moyens de fixation au niveau du terminal de chargement (180') respectif.

10. Système (1) selon l'une quelconque des revendications précédentes, dans lequel la station de mélange et de pompage (1000) comprend des capteurs (1030) configurés pour peser les matières premières provenant des chambres (11a, 11b, 11c) du silo mobile (10), et dans lequel le dosage des matières premières mélangées est établi sur la base de la détection desdits capteurs (1030).

11. Système (1) selon l'une quelconque des revendications précédentes, dans lequel
ledit système (1) comprend des capteurs adaptés pour détecter des paramètres environnementaux dans une zone du chantier de construction, lesdits capteurs étant couplés de manière opérationnelle avec l'unité de gestion (MU), ladite unité de gestion (MU) étant configurée pour interrompre le fonctionnement de la station de mélange et de pompage (1000) si les paramètres environnementaux détectés via lesdits capteurs dépassent ou sont égaux à une valeur seuil déterminée et/ou
la station de mélange et de pompage (1000) est configurée pour effectuer un cycle de lavage automatique de celle-ci, ledit cycle de lavage automatique étant commandable à distance via ladite unité de gestion (MU).

12. Système (1) selon l'une quelconque des revendications précédentes, dans lequel le silo mobile (10) comprend au moins une première chambre (11a) et une deuxième chambre (11b) qui se succèdent le long d'un axe longitudinal (H-H) dudit silo mobile (10), la première chambre (11a) étant adaptée pour contenir des agrégats et la deuxième chambre (11b) étant adapté pour contenir des liants.

13. Système (1) selon la revendication 12, dans lequel le silo mobile (10) comprend en outre une troisième chambre (11c) disposée entre la première chambre (11a) et la deuxième chambre (11b), ladite troisième chambre (11c) étant adaptée pour contenir des liquides.

14. Système (1) selon l'une quelconque des revendications précédentes, dans lequel le silo mobile (10) comprend des capteurs (11as, 11bs, 11cs) configurés pour détecter le niveau des matières premières contenues dans les chambres (11a, 11b, 11c) dudit silo mobile (10), l'unité de gestion (MU) étant configurée en outre pour surveiller la quantité des matières premières dans lesdites chambres (11a, 11b, 11c) dudit silo mobile (10) sur la base des signaux provenant desdits capteurs (11as, 11bs, 11cs), ledit système (1) comprenant en outre des moyens informatiques (200) adaptés pour être installés sur des moyens de transport du silo mobile (10), lesdits moyens informatiques (200) étant en communication opérationnelle avec l'unité de gestion (MU), qui est configurée pour générer des instructions de transport communiquées auxdits moyens informatiques (200), lesdites instructions de transport étant générées sur la base de la quantité de matières premières dans les chambres (11a, 11b, 11c) des silos mobiles (10) détectée via les signaux provenant desdits capteurs (11as, 11bs, 11cs) dans lesdites chambres (11a, 11b, 11c), l'unité de gestion (MU) étant configurée pour estimer le nombre de cycles de mélange et de pompage restants sur la base de ladite quantité détectée.

15. Procédé de production d'un matériau de construction, comprenant les étapes de:
- traiter une recette de production contenant des instructions liées à la production du matériau de construction;
- sur la base de ladite recette de production, commander automatiquement les moyens de chargement d'une station de chargement (100) pour charger les matières premières dans des chambres (11a, 11b, 11c) d'un silo mobile (10);
- transporter le silo mobile (10) sur un chantier de construction;
- commander le retrait des matières premières des chambres (11a, 11b, 11c) du silo mobile (10) transporté sur le chantier de construction sur la base de la recette de production, dans lequel le dosage des matières premières retirées desdites chambres (11a, 11b, 11c) dudit silo mobile (10) est défini automatiquement sur la base des instructions de la recette de production;
- mélanger les matières premières provenant des chambres (11a, 11b, 11c) du silo mobile (10) au moyen d'une station de mélange et de pompage (1000) sur le chantier de construction; et
- poser le matériau de construction obtenu par le mélange.
